# EUROPEAN PATENT APPLICATION

(11) **EP 3 585 040 A1**
(43) Date of publication of application: **25.12.2019**
(21) Application number: 17897034.9
(22) Date of filing: 10.11.2017
(51) Int. Cl.: H04M 11/00, G06F 3/0481, H04W 4/02

(54) **INFORMATION PROCESSING DEVICE, INFORMATION PROCESSING METHOD, AND PROGRAM**

(30) Priority: 14.02.2017 JP 2017024939
(71) Applicant: Sony Corporation, Tokyo 108-0075 (JP)
(72) Inventor: SHIMAKAWA, Masato, Tokyo 108-0075 (JP)
(74) Representative: MFG Patentanwälte Meyer-Wildhagen Meggle-Freund Gerhard PartG mbB
(86) International application number: PCT/JP2017/040594
(87) International publication number: WO 2018/150659

(57) **Abstract**

Proposed is an information processing apparatus, an information processing method, and a program, which are capable of providing, in a predetermined area, a function to a device of one user by another user.

An information processing apparatus including: an acquisition unit configured to acquire first function information of a device of a second user, the first function information being provided in a predetermined area of a real space by a first user; and a transmission control unit configured to control transmission of the first function information to the device of the second user.

## Description

### TECHNICAL FIELD

The present disclosure relates to an information processing apparatus, an information processing method, and a program.

### BACKGROUND ART

Conventionally, various technologies relating to human interfaces that link a real world and a virtual world, such as augmented reality (AR), have been developed.

For example, Patent Document 1 below describes a technology in which a display device having an eyeglass-type display acquires information indicating an external situation from an external device. Furthermore, Patent Document 2 below describes a technology that changes, when free viewpoint content is displayed on a head mounted display (HMD), a display range of an image displayed on the HMD, in accordance with a detection result of posture of a head of a user wearing the HMD.

### CITATION LIST

### PATENT DOCUMENT

Patent Document 1: JP 2015-46885 A
Patent Document 2: JP 2016-25633 A

### SUMMARY OF THE INVENTION

### PROBLEMS TO BE SOLVED BY THE INVENTION

However, in the technologies described in Patent Documents 1 and 2, it is not considered that a function is provided in a predetermined area to a device of a user.

Therefore, the present disclosure proposes a new and improved information processing apparatus, information processing method, and program, which are capable of providing, in a predetermined area, a function to a device of one user by another user.

### SOLUTIONS TO PROBLEMS

According to the present disclosure, there is provided an information processing apparatus including: an acquisition unit configured to acquire first function information of a device of a second user, the first function information being provided in a predetermined area of a real space by a first user; and a transmission control unit configured to control transmission of the first function information to the device of the second user.

Furthermore, according to the present disclosure, there is provided an information processing method including: acquiring first function information of a device of a second user, the first function information being provided in a predetermined area of a real space by a first user; and controlling, by a processor, transmission of the first function information to the device of the second user.

Furthermore, according to the present disclosure, there is provided a program for causing a computer to function as: an acquisition unit configured to acquire first function information of a device of a second user, the first function information being provided in a predetermined area of a real space by a first user; and a transmission control unit configured to control transmission of the first function information to the device of the second user.

### EFFECTS OF THE INVENTION

As described above, according to the present disclosure, it is possible to provide, in a predetermined area, a function to a device of one user by another user. Note that the effect described herein is not necessarily limited, and may be any one of effects described in the present disclosure.

### BRIEF DESCRIPTION OF DRAWINGS

Fig. 1 is an explanatory diagram illustrating a configuration example of an information processing system according to an embodiment of the present disclosure.
Fig. 2 is a functional block diagram illustrating a configuration example of a user device 20 according to the embodiment.
Fig. 3 is a functional block diagram illustrating a configuration example of a server 20 according to the embodiment.
Fig. 4 is a diagram illustrating an example in which sub areas 82 in an area 80 have a hierarchical relationship.
Fig. 5 is an explanatory diagram illustrating an example of acquisition of first function information in the example illustrated in Fig. 4 from a setting information DB 124.
Fig. 6 is an explanatory diagram illustrating a configuration example of the setting information DB 124.
Fig. 7 is an explanatory diagram illustrating contents of a function setting 1218 illustrated in Fig. 6.
Fig. 8 is an explanatory diagram illustrating contents of a permission function 1222 illustrated in Fig. 7.
Fig. 9 is an explanatory diagram illustrating contents of an additional function 1224 illustrated in Fig. 7.
Fig. 10 is an explanatory diagram illustrating contents of a function setting 1268 illustrated in Fig. 6.
Fig. 11 is an explanatory diagram illustrating contents of a permission function 1272 illustrated in Fig. 10.
Fig. 12 is an explanatory diagram illustrating contents of an additional function 1274 illustrated in Fig. 11.
Fig. 13 is an explanatory diagram illustrating an example of a method for determining validity of the user device 20 according to the embodiment.
Fig. 14 is an explanatory diagram illustrating an example of a ticket price table 40 according to the embodiment.
Fig. 15 is an explanatory diagram illustrating another example of the ticket price table 40 according to the embodiment.
Fig. 16 is an explanatory diagram illustrating another example of the ticket price table 40 according to the embodiment.
Fig. 17 is a sequence diagram illustrating a "processing flow when determining the validity of the user device 20" according to the embodiment.
Fig. 18 is a sequence diagram illustrating a "processing flow when transmitting the first function information" according to the embodiment.
Fig. 19 is a sequence diagram illustrating a part of a "processing flow when transmitting second function information" according to the embodiment.
Fig. 20 is a sequence diagram illustrating a part of the "processing flow when transmitting the second function information" according to the embodiment.
Fig. 21 is a sequence diagram illustrating a "flow of charging processing to a remote user 4" according to the embodiment.
Fig. 22 is a configuration diagram illustrating a hardware configuration of the server 10 according to the embodiment.

### MODE FOR CARRYING OUT THE INVENTION

Hereinbelow, preferred embodiments of the present disclosure will be described in detail with reference to accompanying drawings. Note that, in the present specification and the drawings, components having substantially the same functional configuration are denoted by the same reference signs, and redundant description thereof is omitted.

Furthermore, in the present specification and the drawings, a plurality of components having substantially the same functional configuration may be distinguished by attaching different alphabets after the same reference signs. For example, a plurality of components having substantially the same functional configuration is distinguished as a user device 20a and a user device 20b as necessary. Meanwhile, in a case where it is not necessary to distinguish in particular each of a plurality of components having substantially the same functional configuration, the components are simply denoted by the same reference signs. For example, in a case where it is not necessary to distinguish in particular between the user device 20a and the user device 20b, they are simply referred to as a user device 20.

Furthermore, the "mode for carrying out the invention" will be described in the following order of items.
1. Configuration of Information Processing System
2. Detailed Description of Embodiments
3. Hardware Configuration
4. Modification

### <<1. Configuration of Information Processing System>>

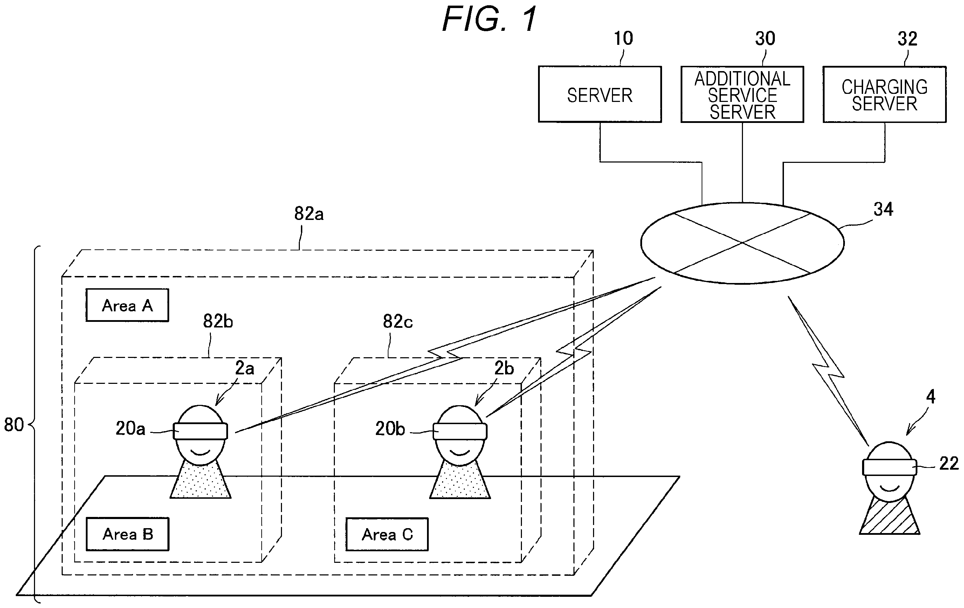

First, a configuration of an information processing system according to an embodiment of the present disclosure will be described with reference to Fig. 1. As illustrated in Fig. 1, the information processing system according to the present embodiment can be applied in a predetermined area 80 (in a real space). Here, the area 80 can be, for example, an area where a predetermined business operator has management authority. For example, the area 80 is a building such as a theme park, a movie theater, an art museum, a museum, a commercial building, a station, or an airport. Furthermore, as illustrated in Fig. 1, the area 80 can include, as well as the building, a predetermined site around the building (for example, a site managed by the business operator together with the building, or a site within a communication area of a wireless local area network (LAN) installed in the building). Here, the business operator is an example of a first user in the present disclosure. Note that, hereinbelow, an example in which the area 80 is a theme park will be mainly described.

Furthermore, in the area 80, a plurality of sub areas 82 can be set in advance. Here, each of the sub areas 82 is an example of a sub area in the present disclosure. The sub area 82 may be defined, for example, for each space such as an attraction (play equipment or the like), a store, an exhibition room, or an entrance, or may be defined for each floor in the area 80. Note that, as illustrated in Fig. 1, at least a part of the plurality of sub areas 82 can be set to have a hierarchical relationship so that, for example, one sub area 82b ("area B") is included in another sub area 82a ("area A").

### <1-1. Background>

Incidentally, if use of a device by a general user is permitted without restriction in the area 80, a profit of the business operator can be impaired. For example, there is a case where the business operator wants to prohibit image capturing (for example, capturing an image of an exhibit) by the general user in a specific sub area 82. Such prohibition is more strongly desired particularly in a case of a device intended to be worn by a user, such as a wearable device, because it is difficult or burdensome for an attendant to confirm a use state of the device in the area 80.

Note that a method for completely prohibiting the use of the device by the general user in the area 80 can also be considered. However, this method greatly impairs convenience of the user. Therefore, there is a need for a service that maximizes the convenience of the general user without impairing the profit of the business operator.

Thus a server 10 according to the present embodiment was created in consideration of the above-described circumstances. The server 10 according to the present embodiment can acquire first function information of a user device 20 provided by the business operator in the area 80 and then transmit the first function information to the user device 20. With this arrangement, it is possible to permit the user device 20 in the area 80 to execute a function in accordance with specification by the business operator. Hereinbelow, the description of the configuration of the information processing system according to the present embodiment will be continued.

As illustrated in Fig. 1, the information processing system includes the server 10, the user device 20, a remote user device 22, an additional service server 30, a charging server 32, and a communication network 34.

### <1-2. User Device 20>

The user device 20 is, for example, a device carried by a user 2 who visits the area 80. For example, the user device 20 may be a head-mounted wearable device such as an AR glass. Here, the user 2 can be a person who does not have the management authority of the area 80. For example, the user 2 is the general user. Note that the user 2 is an example of a second user in the present disclosure. Note that, hereinbelow, an example in which the user device 20 is the wearable device will be mainly described.

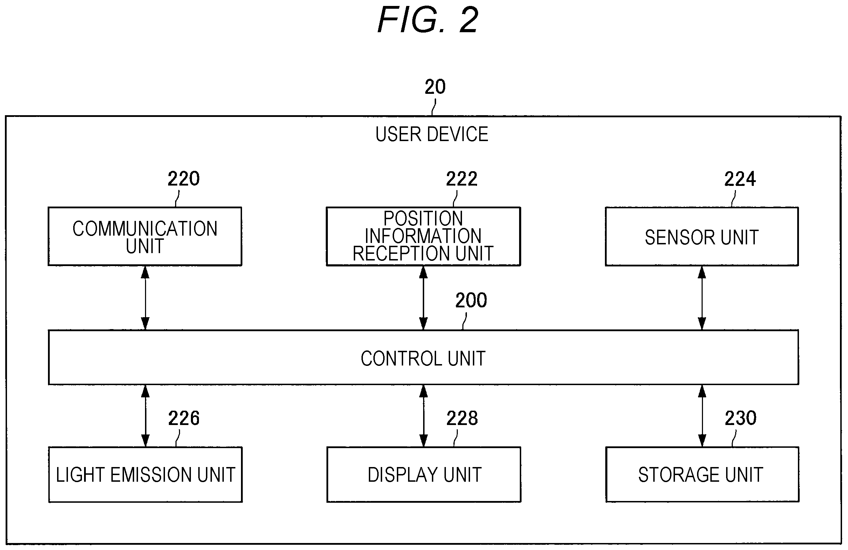

Here, a configuration of the user device 20 will be described with reference to Fig. 2. As illustrated in Fig. 2, the user device 20 includes a control unit 200, a communication unit 220, a position information reception unit 222, a sensor unit 224, a light emission unit 226, a display unit 228, and a storage unit 230.

### {1-2-1. Control Unit 200}

The control unit 200 generally controls operation of the user device 20 using, for example, a central processing unit (CPU) or a random access memory (RAM) built in the user device 20.

For example, the control unit 200 specifies the sub area 82 where the user device 20 is currently positioned among the plurality of sub areas 82 in the area 80 on the basis of a reception result or the like by the position information reception unit 222 as described later. More specifically, the control unit 200 specifies the sub area 82 where the user device 20 is currently positioned by using any two or more of a "specification method 1" to a "specification method 6" as described later in combination. With this arrangement, the sub area 82 where the user device 20 is currently positioned can be specified with high accuracy. However, the present disclosure is not limited to this example, and the control unit 200 may specify the current sub area 82 using only one of these specification methods.

### (1-2-1-1. Specification Method 1)

Hereinbelow, contents of the "specification method 1" to the "specification method 6" will be described. For example, the control unit 200 may specify, as the current sub area 82, a sub area 82 corresponding to position information (such as latitude and longitude) received by the position information reception unit 222 as described later.

### (1-2-1-2. Specification Method 2)

Furthermore, the control unit 200 may receive a service set identifier (SSID) from at least one access point of the wireless LAN installed in the area 80 and then specify, as the current sub area 82, a sub area 82 corresponding to the received SSID.

### (1-2-1-3. Specification Method 3)

Furthermore, the control unit 200 can acquire base station information of a mobile phone or measure electric field intensity from a surrounding base station. In this case, the control unit 200 may specify, as the current sub area 82, a sub area 82 corresponding to the acquired base station information or a measurement result of the electric field intensity from the surrounding base station.

### (1-2-1-4. Specification Method 4)

Furthermore, a predetermined broadcast (an area one-segment or the like) that can be received by a limited sub area 82 can be provided for each sub area 82, for example. In this case, in a case where the predetermined broadcast is received, the control unit 200 may specify, as the current sub area 82, the sub area 82 capable of receiving the predetermined broadcast.

### (1-2-1-5. Specification Method 5)

Furthermore, an illumination installed in a specific sub area 82 can emit light in a predetermined blinking pattern uniquely associated with the sub area 82 (for example, a pattern which has a blinking interval that cannot be perceived by a human being, and on which identification information of the sub area 82 is superimposed), for example. In this case, the control unit 200 may determine presence or absence of the predetermined blinking pattern on the basis of an image captured by the sensor unit 224 (an imaging unit), as described later. Then, in a case where the predetermined blinking pattern is detected, the control unit 200 may specify, as the current sub area 82, a sub area 82 corresponding to the predetermined blinking pattern.

### (1-2-1-6. Specification Method 6)

Furthermore, a speaker installed in a specific sub area 82 can output a predetermined sound uniquely associated with the sub area 82 (for example, a sound which has a frequency exceeding a human audible range, and on which the identification information of the sub area 82 is superimposed), for example. In this case, in a case where the predetermined sound is collected by the sensor unit 224 (a microphone), the control unit 200 may specify, as the current sub area 82, a sub area 82 corresponding to the predetermined sound.

### {1-2-2. Position Information Reception Unit 222}

The position information reception unit 222 can include, for example, a receiver that receives a positioning signal from a positioning satellite such as a global positioning system (GPS) or a global navigation satellite system (GLONASS). For example, the position information reception unit 222 specifies position information (such as latitude and longitude) of the user device 20 on the basis of the positioning signal received from the positioning satellite.

### {1-2-3. Sensor Unit 224}

The sensor unit 224 includes, for example, the imaging unit and a microphone. Furthermore, the sensor unit 224 may further include an acceleration sensor, a gyro sensor, a depth sensor, a geomagnetic sensor, or the like.

For example, the imaging unit captures an image of surroundings of the user (for example, an image in front of the user or an image of an entire celestial sphere) when the user wears the user device 20.

### {1-2-4. Communication Unit 220}

The communication unit 220 communicates with another device via the communication network 34 as described later by wireless communication, for example. Although the details will be described later, for example, the communication unit 220 receives, from the server 10, the first function information provided by the business operator. Here, the first function information can be information indicating a function permitted to be executed by the user device 20 in the area 80. In this case, execution of the function indicated by the first function information can be permitted to the user device 20 (in the area 80), and execution of a function other than the function indicated by the first function information can be restricted (for example, prohibited) to the user device 20 (in the area 80). Here, types of the functions are, for example, image capturing, sound collection, sensing of other types, storage of data, transmission (uploading, streaming, or the like) of data to another device (the remote user device 22 or the like), or access to a link destination associated with the area 80.

For example, the first function information is information indicating a function provided to the user device 20 by the business operator regarding content provided in the area 80. As an example, the first function information includes information indicating a function permitted to the user device 20 regarding content associated with the sub area 82 where the user 2 is positioned in the area 80. Here, the content includes an image (for example, a moving image and free viewpoint content) and sound.

Furthermore, the communication unit 220 transmits detected current position information (for example, the identification information of the current sub area 82) to the server 10 under the control of the control unit 200. Furthermore, the communication unit 220 transmits the image captured by the imaging unit to the remote user device 22 having a predetermined relationship with the user device 20, for example, in real time, under the control of the control unit 200. With this arrangement, the remote user device 22 can display (share) the image captured by the imaging unit in the area 80 in real time. Note that, as a specific method for implementing such transmission of the image between the user device 20 and the remote user device 22, for example, a technology described in WO 2015/122108 A can be used.

Here, the predetermined relationship may be, for example, a relationship in which the corresponding remote user device 22 and the user device 20 are in communication with each other, or a relationship in which a sensing result (such as an image and sound) by the user device 20 in the area 80 is in a state of being transmittable (set to be transmittable, for example) to the corresponding remote user device 22.

### {1-2-5. Display Unit 228}

The display unit 228 displays various types of information under the control of the control unit 200. For example, the display unit 228 can be configured as a transmissive display device. In this case, the display unit 228 projects an image using, as a projection plane, at least a partial area of a right-eye lens and a left-eye lens (or a goggle-type lens) included in the user device 20.

Alternatively, the display unit 228 may be configured as a non-transmissive display device. For example, the display unit 228 can include a liquid crystal display (LCD) or an organic light emitting diode (OLED). Note that, in this case, images in front of the user captured by the sensor unit 224 (imaging unit) may be sequentially displayed on the display unit 228. With this arrangement, the user can see a scene in front of the user through the image displayed on the display unit.

### <1-3. Remote User Device 22>

The remote user device 22 is, for example, a device used by a remote user 4 positioned at a remote place outside the area 80. For example, the remote user device 22 may be a head-mounted device such as an AR glass or a HMD, a mobile phone such as a smartphone, a tablet terminal, or a general-purpose personal computer (PC). Here, the remote user 4 can be a person who does not have the management authority of the area 80. For example, the remote user 4 is the general user. Note that the remote user 4 is an example of a third user in the present disclosure.

The remote user device 22 can communicate with another device via the communication network 34. For example, the remote user device 22 receives, from the user device 20, the image based on image capturing by the user device 20 having the above-described predetermined relationship. With this arrangement, the remote user device 22 can display (share) the image captured by the user device 20 in the area 80 in real time. In addition, by viewing the image, the remote user 4 can obtain an experience as if he or she were in the area 80.

Furthermore, remote user device 22 receives, from the server 10, second function information provided by the business operator. For example, the remote user device 22 may receive the second function information from the server 10 via the user device 20 or directly from the server 10. Here, the second function information can be, for example, information indicating a function permitted to be executed by the remote user device 22 in a case where the user device 20 having the above-described predetermined relationship with the remote user device 22 is positioned in the area 80. In this case, execution of the function indicated by the second function information can be permitted to the remote user device 22, and execution of a function other than the function indicated by the second function information can be restricted (for example, prohibited) to the remote user device 22. Here, types of the functions are, for example, display, sound output, storage of data, or transmission of data to another device.

For example, the second function information is information indicating a function provided to the remote user device 22 by the business operator regarding content in the area 80 in the case where the user device 20 having the above-described predetermined relationship with the remote user device 22 is positioned in the area 80. As an example, the second function information includes information indicating a function permitted to the remote user device 22 regarding content associated with the sub area 82 where the user 2 using the user device 20 is positioned.

### <1-4. Server 10>

The server 10 is an example of an information processing apparatus in the present disclosure. The server 10 is an apparatus for managing setting information relating to the first function information provided to the user device 20 in the area 80 and the second function information provided to the remote user device 22. For example, the server 10 transmits, on the basis of a request from the user device 20 or the like, the first function information corresponding to contents registered in a setting information DB 124 as described later to the user device 20. Furthermore, the server 10 transmits, on the basis of a request from the remote user device 22 or the like, the second function information corresponding to the contents registered in the setting information DB 124 to the remote user device 22. Note that the contents registered in the setting information DB 124 can be managed by the business operator.

Note that, although only one server 10 is illustrated in Fig. 1, the present disclosure is not limited to such an example, and functions of the server 10 according to the present embodiment may be implemented by a plurality of computers operating cooperatively.

### <1-5. Additional Service Server 30>

The additional service server 30 is a device for providing the user device 20 and the remote user device 22 with an additional function. For example, the additional service server 30 provides the user device 20 with a function of a type indicated by the first function information, on the basis of a request from the user device 20 to which the first function information has been transmitted. Furthermore, the additional service server 30 provides the remote user device 22 with a function of a type indicated by the second function information, on the basis of a request from the remote user device 22 to which the second function information has been transmitted.

For example, in association with a predetermined sub area 82 where an exhibit (such as a painting) is arranged, predetermined content (for example, content for explanation of the exhibit or link information to a sales site of related products) can be registered. In this case, the additional service server 30 can store the link information (such as URL) of the content in association with the predetermined sub area 82. Furthermore, the additional service server 30 can provide the user device 20 with access information (such as the link information) of the content only in a case where the user device 20 is positioned in the predetermined sub area 82.

### <1-6. Charging Server 32>

The charging server 32 is a device for managing a purchase state of a predetermined ticket or a charging state of each user 2 and each remote user 4. Note that, although details will be described later, for example, for a device owned by a user 2 or a remote user 4 who has purchased a predetermined ticket, more types of functions can be provided (or permitted) by the business operator as compared to a user 2 or a remote user 4 who has not purchased the predetermined ticket.

### <1-7. Communication Network 34>

The communication network 34 is a wired or wireless transmission line for information transmitted from a device connected to the communication network 34. For example, the communication network 34 may include a public network such as a telephone network, the Internet, and a satellite communication network, and various types of a local area network (LAN) including Ethernet (registered trademark) or a wide area network (WAN). Furthermore, the communication network 34 may include a dedicated network such as an internet protocol-virtual private network (IP-VPN).

### <<2. Detailed Description of Embodiments>>

### <2-1. Configuration>

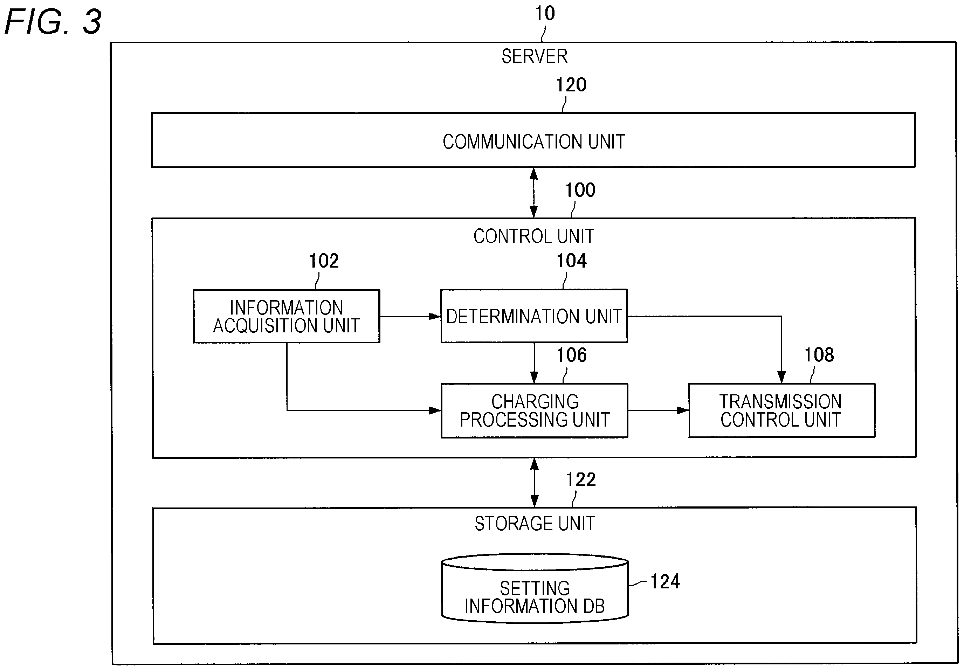

The configuration of the information processing system according to the present embodiment has been described above. Next, a configuration of the present embodiment will be described in detail. Fig. 3 is a functional block diagram illustrating a configuration example of the server 10 according to the present embodiment. As illustrated in Fig. 3, the server 10 includes a control unit 100, a communication unit 120, and a storage unit 122.

### {2-1-1. Control Unit 100}

The control unit 100 can include, for example, a processing circuit such as a CPU 150 as described later. The control unit 100 comprehensively controls operation of the server 10. Furthermore, as illustrated in Fig. 3, the control unit 100 includes an information acquisition unit 102, a determination unit 104, a charging processing unit 106, and a transmission control unit 108.

### {2-1-2. Information Acquisition Unit 102}

The information acquisition unit 102 is an example of an acquisition unit in the present disclosure. The information acquisition unit 102 acquires the first function information of the user device 20 on the basis of, for example, a request from the user device 20 in the area 80, by referring to the setting information DB 124 as described later. Furthermore, the information acquisition unit 102 acquires the second function information of the remote user device 22 on the basis of, for example, a request from the user device 20 or the remote user device 22 in the area 80, by referring to the setting information DB 124.

### (2-1-2-1. Acquisition of First Function Information)

### - Acquisition Example 1: Position

Hereinbelow, first, a method for acquiring the first function information by the information acquisition unit 102 will be described in detail. For example, in a case where a detection result of a position of the user device 20 (such as the identification information of the sub area 82) is received, the information acquisition unit 102 acquires, as the first function information of the user device 20, function information registered in the setting information DB 124 in association with the detection result of the position.

As an example, in the setting information DB 124, the first function information can be registered in association with the identification information of the sub area 82. In this case, the information acquisition unit 102 may acquire, as the first function information of the user device 20, first function information registered in the setting information DB 124 in association with the identification information of the sub area 82 corresponding to the received detection result of the position. For example, in a case where the detection result of the position of the user device 20 is received from the user device 20, the information acquisition unit 102 can specify the identification information of the sub area 82 corresponding to the detection result of the position by referring to a predetermined database.

Note that, in a case where there is a plurality of sub areas 82 corresponding to the detection result of the position, the information acquisition unit 102 may acquire, as the first function information of the user device 20, function information registered in the setting information DB 124 in association with a sub area 82 with the highest priority associated with each of the plurality of sub areas 82.

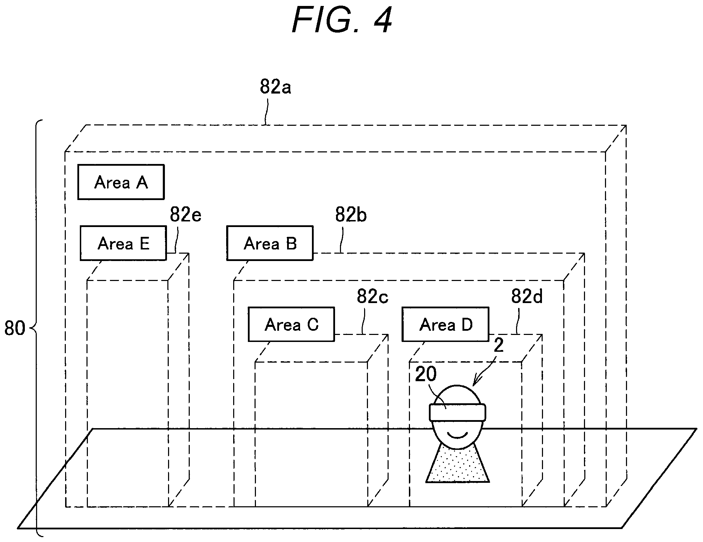

For example, in an example illustrated in Fig. 4, the user 2 is positioned in a sub area 82d ("area D"). Furthermore, the sub area 82d is included in a sub area 82b ("area B"), and the sub area 82b is included in a sub area 82a ("area A", that is, the entire area 80). That is, in this example, the sub area 82 corresponding to the detection result of the position of the user 2 can be the sub area 82a, the sub area 82b, and the sub area 82d.

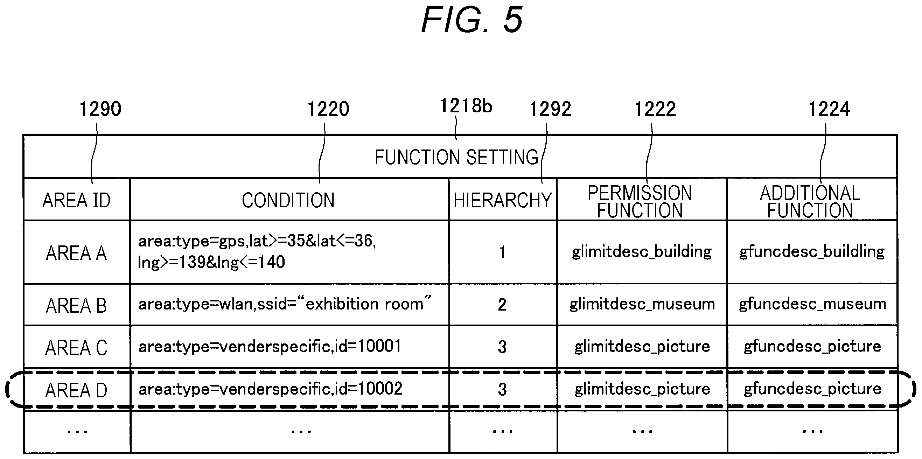

Fig. 5 is an explanatory diagram illustrating an example of acquisition of the first function information in the example illustrated in Fig. 4 from the setting information DB 124. As indicated by a broken line in Fig. 5, the information acquisition unit 102 acquires, as the first function information of the user device 20, function information registered in the setting information DB 124 in association with the "area D" being the sub area 82 having a highest set value (that is, priority) of a hierarchy 1292 among the plurality of sub areas 82 corresponding to the detection result of the position of the user 2 (in an example illustrated in Fig. 5, "glimitdesc picture" (permission function) and "gfuncdesc picture" (additional function)). Note that specific contents of the setting information DB 124 will be described later.

### - Acquisition Example 2: Identification Information of User 2

Furthermore, in the setting information DB 124, contents of the first function information can be registered further in association with information regarding the user 2 (such as identification information or age of the user 2). In this case, the information acquisition unit 102 may acquire, as the first function information of the user device 20, first function information registered in the setting information DB 124 in association with identification information of the user 2 wearing the corresponding user device 20.

### - Acquisition Example 3: Identification Information of User Device 20

Furthermore, in the setting information DB 124, contents of the first function information can be registered further in association with identification information of the user device 20. In this case, the information acquisition unit 102 may acquire, as the first function information of the user device 20, first function information registered in the setting information DB 124 in association with the identification information of the corresponding user device 20.

### - Acquisition Example 4: Purchase State of Predetermined Ticket or Charging State

Furthermore, in the setting information DB 124, contents of the first function information can be registered further in association with information indicating the purchase state of a predetermined ticket (whether or not the predetermined ticket has been purchased, a type of a purchased ticket, or the like) or the charging state (for example, an amount charged to the user 2) of the user 2. In this case, the information acquisition unit 102 may acquire, as the first function information of the user device 20, first function information registered in the setting information DB 124 in association with the information indicating the purchase state of the predetermined ticket or the charging state of the user 2 using the corresponding user device 20.

For example, the information acquisition unit 102 first causes the charging server 32 to transmit, to the communication unit 120 as described later, an inquiry about the information indicating the purchase state of the predetermined ticket or the charging state of the user 2 using the corresponding user device 20. Then, the information acquisition unit 102 acquires, as the first function information of the user device 20, first function information registered in the setting information DB 124 in association with the information indicating the purchase state of the predetermined ticket or the charging state of the user 2 received from the charging server 32.

### (2-1-2-2. Acquisition of Second Function Information)

Next, a method for acquiring the second function information by the information acquisition unit 102 will be described in detail. For example, in the setting information DB 124, the second function information can be registered in association with the first function information. In this case, the information acquisition unit 102 acquires, as the second function information of the remote user device 22, second function information registered in the setting information DB 124 in association with the first function information of the user device 20 having the above-described predetermined relationship with the remote user device 22.

### - Acquisition Example 1: Identification Information of Remote User 4

Furthermore, in the setting information DB 124, contents of the second function information can be registered further in association with information regarding the remote user 4 (such as identification information or age of the remote user 4). In this case, the information acquisition unit 102 may acquire, as the second function information of the remote user device 22, second function information registered in the setting information DB 124 in association with identification information of the remote user 4 using the remote user device 22.

### - Acquisition Example 2: Identification Information of Remote User Device 22

Furthermore, in the setting information DB 124, contents of the second function information can be registered further in association with identification information of the remote user device 22. In this case, the information acquisition unit 102 may acquire, as the second function information of the remote user device 22, second function information registered in the setting information DB 124 in association with the identification information of the remote user device 22.

### - Acquisition Example 3: Purchase State of Predetermined Ticket or Charging State

Furthermore, in the setting information DB 124, contents of the second function information can be registered further in association with information indicating the purchase state of the predetermined ticket (whether or not the predetermined ticket has been purchased, a type of a purchased ticket, or the like) or the charging state (for example, an amount charged to the remote user 4) of the remote user 4. In this case, the information acquisition unit 102 may acquire, as the second function information of the remote user device 22, second function information registered in the setting information DB 124 in association with the information indicating the purchase state of the predetermined ticket or the charging state of the remote user 4 using the remote user device 22.

For example, the information acquisition unit 102 first causes the charging server 32 to transmit, to the communication unit 120, an inquiry about the information indicating the purchase state of the predetermined ticket or the charging state of the remote user 4 using the remote user device 22. Then, the information acquisition unit 102 may acquire, as the second function information of the remote user device 22, second function information registered in the setting information DB 124 in association with the information indicating the purchase state of the predetermined ticket or the charging state of the remote user 4 received from the charging server 32.

### - Acquisition Example 4: Relationship between Remote User 4 and User 2

Furthermore, in the setting information DB 124, contents of the second function information can be registered in association with information indicating a relationship between the remote user 4 using the remote user device 22 and the user 2 using the user device 20 having the predetermined relationship with the remote user device 22 (for example, whether or not they are in family relation or acquaintance relation, or intimacy between them). In this case, the information acquisition unit 102 may acquire, as the second function information of the remote user device 22, second function information registered in the setting information DB 124 in association with the information indicating the relationship between the remote user 4 and the corresponding user 2. Note that, for example, information indicating a relationship between persons (for example, parent-child relation or friend relation) can be recorded in advance in a predetermined database. In this case, the information acquisition unit 102 may first specify the information indicating the relationship between the corresponding remote user 4 and the corresponding user 2 by referring to the predetermined database, and then acquire, as the second function information of the remote user device 22, second function information registered in the setting information DB 124 in association with the information indicating the specified relationship.

Alternatively, the information acquisition unit 102 may acquire, as the second function information of the remote user device 22, second function information registered in the setting information DB 124 in association with information indicating intimacy between the corresponding remote user 4 and the corresponding user 2. Note that, for example, in a predetermined social networking service (SNS), a predetermined social graph, or the like, it can be determined that the intimacy between the corresponding remote user 4 and the corresponding user 2 becomes higher as the number of nodes in a path connecting the corresponding remote user 4 and the corresponding user 2 becomes smaller.

### (2-1-2-3. Setting Information DB 124)

### - User Device Setting

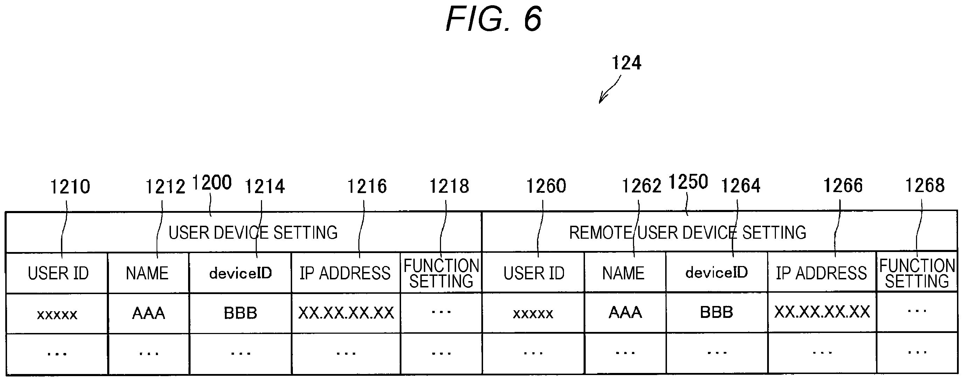

Here, a configuration example of the setting information DB 124 will be described with reference to Fig. 6. As illustrated in Fig. 6, in the setting information DB 124, for example, a user device setting 1200 and a remote user device setting 1250 are associated with each other. Here, in the user device setting 1200, setting contents relating to the first function information specified by the business operator are recorded. Furthermore, in the remote user device setting 1250, setting contents relating to the second function information specified by the business operator are recorded.

Furthermore, the user device setting 1200 include a user ID 1210, a name 1212, a device ID 1214, an IP address 1216, and a function setting 1218. Here, in the user ID 1210, identification information (ID) of each user 2 is recorded. Furthermore, in the name 1212, a name of the corresponding user 2 is recorded. Furthermore, in the device ID 1214, identification information (ID) of the user device 20 used by the corresponding user 2 is recorded. Furthermore, in the IP address 1216, an IP address associated with the corresponding user device 20 is recorded. Furthermore, in the function setting 1218, setting contents relating to a function to be permitted or added to the corresponding user device 20 are recorded.

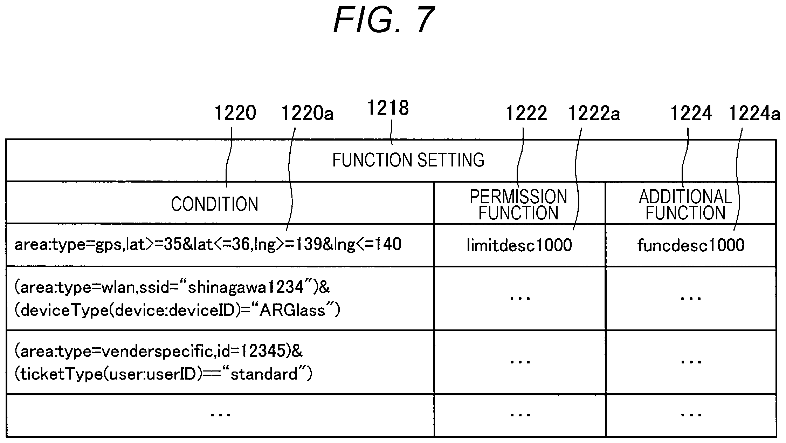

Fig. 7 is an explanatory diagram illustrating specific contents of the function setting 1218. As illustrated in Fig. 7, the function setting 1218 includes a condition 1220, a permission function 1222, and an additional function 1224. Here, in the permission function 1222, a function of a type permitted to the user device 20 in a case where the corresponding user device 20 satisfies a condition recorded in the condition 1220 is recorded. Note that execution of a function other than the function of the type recorded in the permission function 1222 is not permitted (or can be restricted) to the user device 20. Furthermore, in the additional function 1224, for example, a function, information, or the like provided to the user device 20 by the additional service server 30 in the case where the corresponding user device 20 satisfies the condition recorded in the condition 1220 is recorded. Furthermore, in the condition 1220, a condition relating to, for example, the sub area 82 where the user 2 is positioned, the identification information of the user 2, the identification information or a type of the user device 22, or the purchase state of the predetermined ticket (or the charging state) of the user 2 is recorded.

In an example illustrated in Fig. 7, in a case where a condition 1220a is satisfied regarding a certain user device 20, execution of a function indicated by permission function information 1222a, "limitdesc1000", is permitted to the user device 20, and a function or information indicated by additional function information 1224a, "funcdesc1000", is provided to the user device 20.

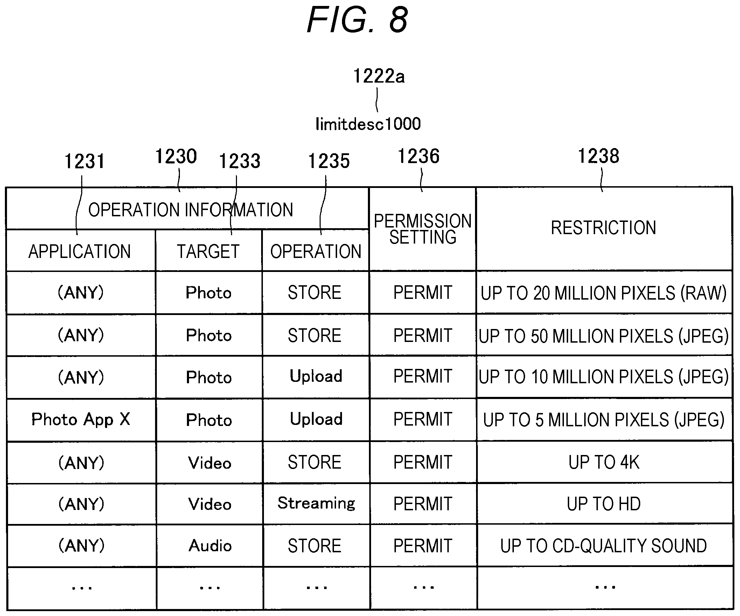

Fig. 8 is an explanatory diagram illustrating specific contents of the permission function 1222 (more specifically, "limitdesc1000" in Fig. 7). As illustrated in Fig. 8, the permission function 1222 includes operation information 1230, a permission setting 1236, and a restriction 1238. Furthermore, the operation information 1230 includes an application 1231, a target 1233, and operation 1235. Here, the operation information 1230 indicates that operation (a function) of a type recorded in the operation 1235 is performed on data of a type recorded in the target 1233 during startup of an application of a type recorded in the application 1231. Furthermore, in the permission setting 1236, setting contents as to whether or not execution of operation contents (functions) recorded in the operation information 1230 is permitted regarding the corresponding user device 20 are recorded. Furthermore, in the restriction 1238, contents of restriction relating to the operation contents in a case where it is set that the execution of the operation contents (functions) recorded in the operation information 1230 is permitted regarding the corresponding user device 20 are recorded. For example, in an example illustrated in Fig. 8, in an arbitrary application, it is set that the user device 20 is permitted to store photographic data of "20 million" pixels or less, regarding a RAW-format photograph.

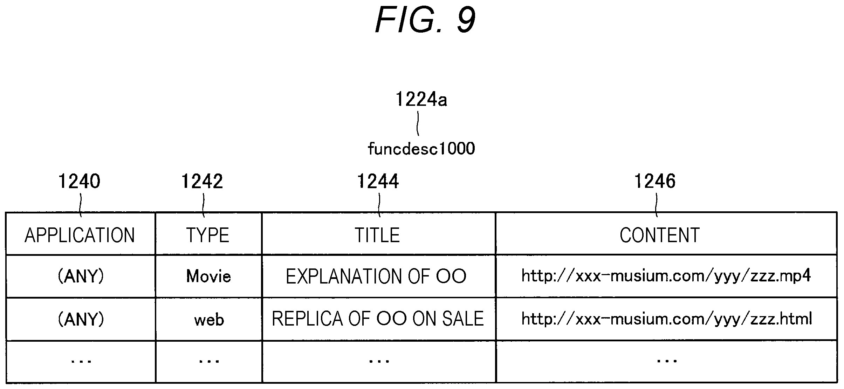

Furthermore, Fig. 9 is an explanatory diagram illustrating specific contents of the additional function 1224 (more specifically, "funcdesc1000" in Fig. 7). As illustrated in Fig. 9, the additional function 1224 includes an application 1240, a type 1242, a title 1244, and content 1246. Here, in the application 1240, a type of an application that can be executed regarding the content is recorded. Furthermore, in the type 1242, a type (such as data type) of the content is recorded. Furthermore, in the title 1244, a title of the content is recorded. Furthermore, in the content 1246, link information of the content is recorded. For example, in an example illustrated in Fig. 9, in an arbitrary application, it is set that execution of a function (for example, display) related to a moving image titled "Explanation of OO" is permitted to the user device 20.

### - Remote User Device setting

Furthermore, as illustrated in Fig. 6, the remote user device setting 1250 include a user ID 1260, a name 1262, a device ID 1264, an IP address 1266, and a function setting 1268. Note that contents of the remote user device setting 1250 are generally the same as those of the user device setting 1200, except that the remote user device setting 1250 are for the remote user 4 (instead of the user 2) and the remote user device 22 (instead of the user device 20).

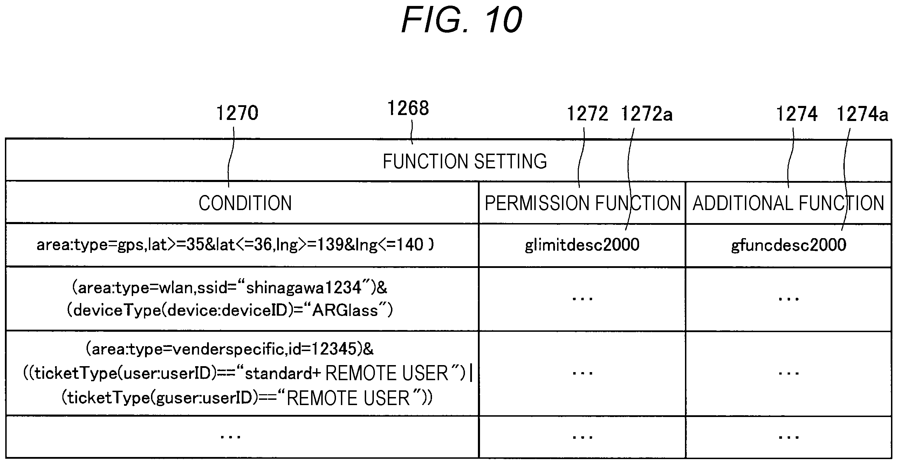

Fig. 10 is an explanatory diagram illustrating specific contents of the function setting 1268. As illustrated in Fig. 10, the function setting 1268 includes a condition 1270, a permission function 1272, and an additional function 1274. Here, contents of the permission function 1272 and the additional function 1274 are generally the same as those of the permission function 1222 and the additional function 1224 illustrated in Fig. 7, except that the permission function 1272 and the additional function 1274 are for the remote user 4 (instead of the user 2) and the remote user device 22 (instead of the user device 20). Furthermore, in the condition 1270, a condition relating to the following is recorded, for example: the sub area 82 where the user 2 using the user device 20 having the above-described predetermined relationship with the corresponding remote user device 22 is positioned, the identification information of the user 2, the identification information or a type of the user device 22, the purchase state of the predetermined ticket or the charging state of the user 2, the identification information of the remote user 4, the identification information or a type of the remote user device 22, or the purchase state of the predetermined ticket (or the charging state) of the remote user 4. For example, in the condition 1270, the upper limit number (capacity) of the remote user 4 capable of sharing an image with the user 2 regarding the corresponding sub area 82 can be recorded.

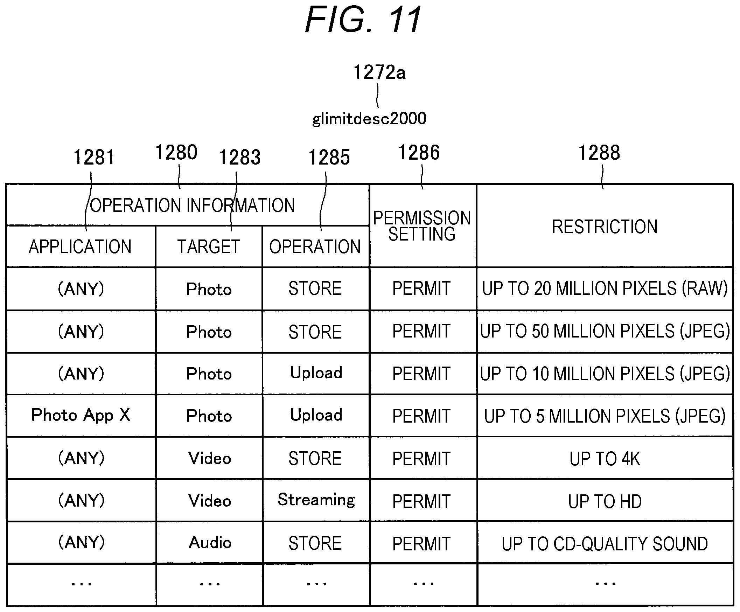

Furthermore, Fig. 11 is an explanatory diagram illustrating specific contents of the permission function 1272 (more specifically, "glimitdesc2000" in Fig. 10). Note that the contents of the permission function 1272 are generally the same as those of the permission function 1222 illustrated in Fig. 8, except that the permission function 1272 is for the remote user 4 (instead of the user 2) and the remote user device 22 (instead of the user device 20).

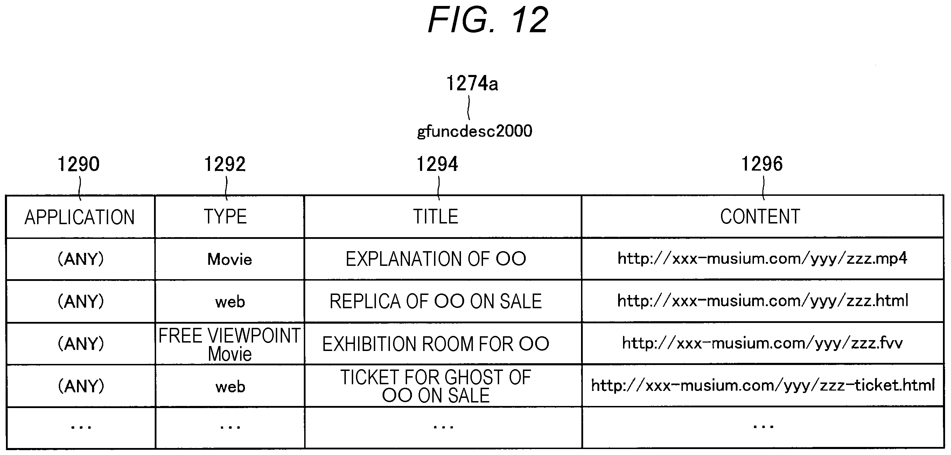

Furthermore, Fig. 12 is an explanatory diagram illustrating specific contents of the additional function 1274 (more specifically, "gfuncdesc2000" in Fig. 10). Note that the contents of the additional function 1274 are generally the same as those of the additional function 1224 illustrated in Fig. 9, except that the additional function 1274 is for the remote user 4 (instead of the user 2) and the remote user device 22 (instead of the user device 20).

### {2-1-3. Determination Unit 104}

The determination unit 104 determines whether or not the user device 20 is a valid device on the basis of a detection result of a signal transmitted by the user device 20. Here, a valid device can be a device having permission to use the first function information.

For example, a device detection device 90 that outputs a predetermined signal (for example, light of a predetermined blinking pattern) can be installed in the area 80. In this case, for example, the determination unit 104 determines that the user device 20 is a valid device in a case of receiving, from the device detection device 90, a detection result indicating that a signal corresponding to the predetermined signal is output by the user device 20 within a predetermined time after the device detection device 90 output the predetermined signal,. Furthermore, the determination unit 104 determines that the user device 20 is not a valid device in a case of receiving, from the device detection device 90, a detection result indicating that a signal that does not correspond to the predetermined signal is output within the predetermined time after the device detection device 90 output the predetermined signal, or that a signal is not output by the user device 20 within the predetermined time. Note that, for example, an attendant in the area 80 is notified of the user device 20 determined not to be a valid device, so that use of such user device 20 can be restricted manually (for example, such user device 20 can be confiscated).

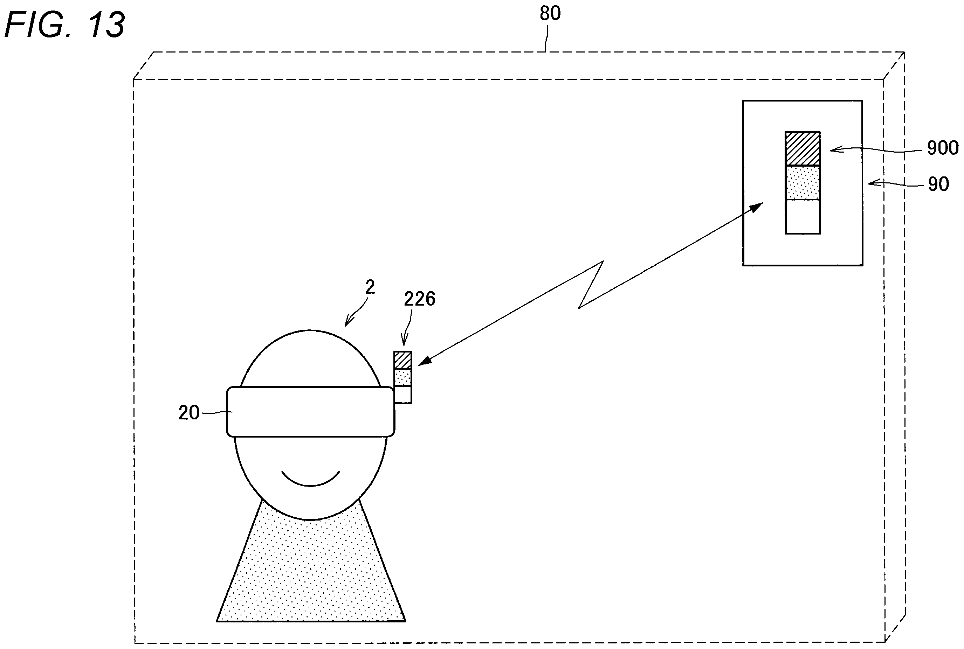

For example, as illustrated in Fig. 13, the device detection device 90 can include, for example, three-color light emitting diodes (LEDs) 900, and the light emission unit 226 of the user device 20 can include three-color LEDs. In this case, the determination unit 104 determines that the user device 20 is a valid device in a case of receiving, from the device detection device 90, a detection result indicating that, within a predetermined time after the LEDs 900 of the device detection device 90 has emit light in a predetermined light emission pattern (for example, a pattern in which a lighting state (ON/OFF, brightness, and the like) of each of the three-color LEDs is changed with time), the light emission unit 226 of the user device 20 emit light in the same pattern as the predetermined light emission pattern.

Alternatively, the determination unit 104 may determine whether or not the user device 20 is a valid device on the basis of whether or not the device detection device 90 detects that, within a predetermined time after the device detection device 90 emit invisible light (such as infrared light) in a predetermined light emission pattern, the user device 20 emit invisible light in the same pattern as the predetermined light emission pattern. According to this method, since invisible light is used, there is an advantage that the light emission pattern is not perceived by a person (also including the user 2 using a valid user device 20) in the area 80. Furthermore, there is an advantage that convenience of the user is not impaired even when the user device 20 is used in a scene such as during a movie show.

Note that it can be secured (protected) by law or a protocol that it is impossible to receive, by a device other than a valid user device 20, a signal corresponding to the predetermined signal output by the device detection device 90, or to output the signal corresponding to the predetermined signal.

Furthermore, the device detection device 90 can be installed in the area 80 (for example, the device detection device 90 is installed on a ceiling of each room in the area 80) so that the signal output by the device detection device 90 reaches a wide range in the area 80. In this case, it is possible to collectively determine whether or not each of a plurality of devices in the area 80 is a valid device on the basis of the signal output by the device detection device 90.

### (2-1-3-1. Modification)

### - Modification 1

Note that, in the above description, an example in which the light emission unit 226 of the user device 20 emits light on the basis of the signal output by the device detection device 90 has been described, but the present disclosure is not limited to such an example. For example, only the LEDs installed in the area 80 (for example, at an entrance gate) may emit light. In this case, for example, the device detection device 90 may cause the LEDs to emit light only in a case where it is detected that the user device 20 is not a valid device when the user 2 wearing the user device 20 passes near a location where the LEDs are installed in the area 80. According to this example, since the user device 20 does not emit light, for example, an attendant in the area 80 can know whether or not the target user device 20 is a valid device without being noticed by the user 2. Furthermore, each user 2 is not given an impression of being checked.

### - Modification 2

Alternatively, an attendant in the area 80 may be able to check validity of the user device 20 being worn by each user 2 in the area 80 by using a predetermined portable device that outputs a predetermined signal. For example, when checking baggage of each user 2 at an entrance or the like of the area 80, the attendant may use the predetermined device to check the validity of the user device 20 being worn by the user 2.

### {2-4-1. Charging Processing Unit 106}

### (2-1-4-1. Acquisition of Ticket Purchase State/Charging State)

The charging processing unit 106 acquires, from the charging server 32, the information indicating the purchase state of the predetermined ticket or the charging state associated with each user 2 positioned in the area 80, for example. Furthermore, the charging processing unit 106 acquires, from the charging server 32, the information indicating the purchase state of the predetermined ticket or the charging state associated with the remote user 4 using each remote user device 22 having the above-described predetermined relationship with at least one user device 20 in the area 80. For example, by causing the communication unit 120 to transmit to the charging server 32 an acquisition request of the information indicating the purchase state of the predetermined ticket or the charging state associated with each user 2 or each remote user 4, the charging processing unit 106 acquires the information indicating the purchase state of the predetermined ticket or the charging state from the charging server 32.

### (2-1-4-2. Ticket Purchase Processing)

Furthermore, the charging processing unit 106 can perform purchase processing of the predetermined ticket (or charging processing) on the basis of a ticket purchase request received from the user device 20 or the remote user device 22. For example, in a case where a ticket purchase request is received from a certain user device 20 or a certain remote user device 22, the charging processing unit 106 first performs settlement processing for a price of a ticket of a type indicated by the ticket purchase request with respect to the user 2 or the remote user 4 as a transmission source of the ticket purchase request. Then, the charging processing unit 106 causes the charging server 32 to additionally register that the user 2 or the remote user 4 has purchased the ticket as a purchase history.

Note that, for example, the ticket purchase request can be transmitted from the user device 20 to the server 10 on the basis of operation (for example, gesture operation or a sound command) of the user 2 on a predetermined user interface (UI) (such as a web screen) displayed on a display unit (not illustrated) of the user device 20. Furthermore, the ticket purchase request can be transmitted from the remote user device 22 to the server 10 on the basis of operation (for example, gesture operation or a sound command) of the remote user 4 on a predetermined UI displayed on a display unit (not illustrated) of the remote user device 22.

### - Ticket Discount and Refund

Hereinbelow, contents of the "ticket purchase processing" by the charging processing unit 106 will be described in more detail. For example, a price for each type of the ticket, a ticket discount condition, and the like can be registered in the charging server 32 (for example, a ticket price table 40 in the charging server 32) by the business operator. In this case, in the case where the ticket purchase request is received from the user device 20 or the remote user device 22, the charging processing unit 106 may first determine the price of the ticket to be purchased by inquiring the charging server 32 of a normal price and the ticket discount condition for the ticket of the type indicated by the ticket purchase request. For example, in a case where the ticket discount condition is satisfied and the ticket discount condition indicates a reduction in the price of the ticket, the charging processing unit 106 determines the price reduced from the normal price of the ticket on the basis of the ticket discount condition as the (final) price of the ticket. Furthermore, in a case where the ticket discount condition is satisfied and the ticket discount condition indicates a refund amount, for example, the charging processing unit 106 performs processing of refunding the refund amount indicated by the ticket discount condition to another user 2 or another remote user 4 who has purchased a ticket of the same type as the ticket. According to these examples, a profit can be returned to the user 2 or the remote user 4 in a specific case.

### -- Modification

Note that, as a modification, in a case where the ticket discount condition is satisfied, privilege of content (for example, a right to browse special content) may be provided or a predetermined point may be imparted to the corresponding user 2 or the corresponding remote user 4, instead of refunding. Furthermore, only in a case where the number of remote users 4 who purchase the ticket of the same type reaches a predetermined number, a predetermined function may be permitted or a predetermined service may be provided to all the corresponding user 2 and all the corresponding plurality of remote users 4.

### - Inquiry about Acceptance/Non-acceptance of Price

Furthermore, the charging processing unit 106 may inquire of the user 2 or the remote user 4 as the transmission source of the ticket purchase request acceptance/non-acceptance of the determined price of the ticket, and then perform the settlement processing of the ticket on the basis of an answer to the inquiry. For example, in a case where the answer indicates that the price of the ticket is accepted, the charging processing unit 106 performs the settlement processing of the ticket. Furthermore, in a case where the answer indicates that the price of the ticket is not accepted, the charging processing unit 106 does not perform the settlement processing of the ticket.

### (2-1-4-3. Ticket Price Table 40)

### - Example 1 of Ticket Price Table 40

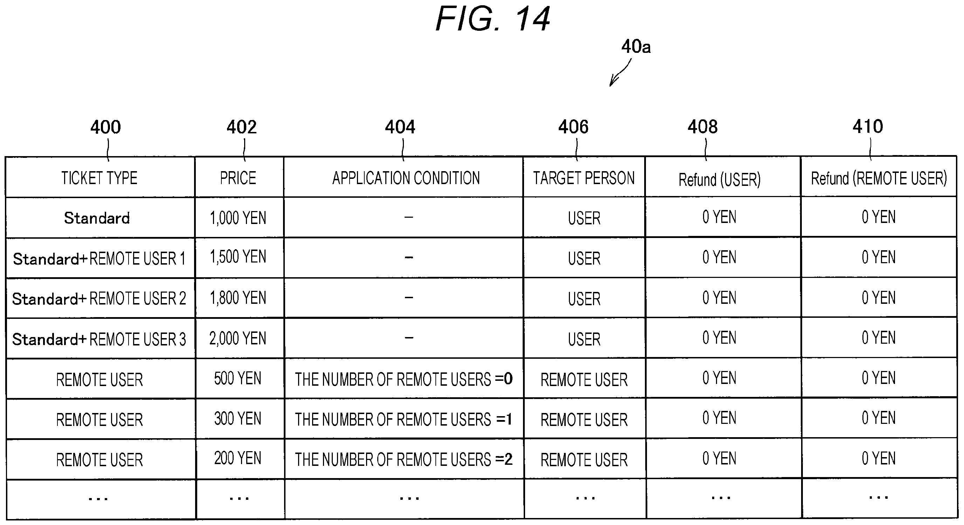

Here, a configuration example of the above-described ticket price table 40 will be described with reference to Figs. 14 to 16. Fig. 14 is an explanatory diagram illustrating an example of the ticket price table 40 (a ticket price table 40a). Note that Fig. 14 shows an example of setting the price of a ticket of a predetermined type in a case where the ticket is purchased by one user 2, each remote user 4 associated with the user 2 (that is, the remote user 4 using each remote user device 22 having the above-described predetermined relationship with the user device 20 of the user 2), or a set of the user 2 and the remote user 4. Furthermore, as illustrated in Fig. 14, in the ticket price table 40, for example, a ticket type 400, a price 402, an application condition 404, a target person 406, a refund 408 to the user, and a refund 410 to the remote user are associated. Here, in the ticket type 400, a type of (selling) the ticket is recorded. For example, "Standard" is a type for selling only one ticket for one user 2. Furthermore, "Standard + Remote User 2" is a type for selling one ticket for one user 2 and tickets for two remote users 4 together. Furthermore, "Remote User" is a type for selling only one ticket for one remote user 4. Note that a ticket corresponding to "Standard" may be, for example, an admission ticket to the area 80.

Furthermore, in the price 402, a (total) price of the corresponding ticket type is recorded. Furthermore, in the application condition 404, a condition under which the corresponding ticket can be purchased is recorded. Furthermore, in the target person 406, a type of a user who can purchase the corresponding ticket (the user 2 or the remote user 4) is recorded. Furthermore, in the refund 408 to the user, an amount to be refunded to the corresponding user 2 in a case where the corresponding ticket is purchased is recorded. Furthermore, in the refund 410 to the remote user, an amount to be refunded to a specific remote user 4 associated with the user 2 (for example, a remote user 4 who has purchased a ticket of the same type) in a case where the corresponding ticket is purchased is recorded.

As illustrated in Fig. 14, in the ticket price table 40a, the price of the ticket for the remote user 4 is set such that the price becomes lower as a ticket purchase order of the remote user 4 becomes later. More specifically, the price is set such that the price of the ticket for the remote user 4 becomes lower as the number of remote users 4 who have purchased the ticket increases. For example, the price of the ticket type "Remote User" is "500 yen" when the number of the remote users 4 who have already purchased the ticket is "0", "300 yen" when the number of the remote users 4 who have already purchased the ticket is "1", and "200 yen" when the number of the remote users 4 who have already purchased the ticket is "2". According to the ticket price table 40a, since the price of the ticket for the remote user 4 becomes lower as the ticket purchase order of the remote user 4 becomes later, it can be expected that more remote users 4 will purchase the ticket.

Note that, as a modification, (in contrast with the example illustrated in Fig. 14,) the price of the ticket for the remote user 4 may be set such that the price of the ticket becomes higher as the ticket purchase order of the remote user 4 becomes later.

### - Example 2 of Ticket Price Table 40

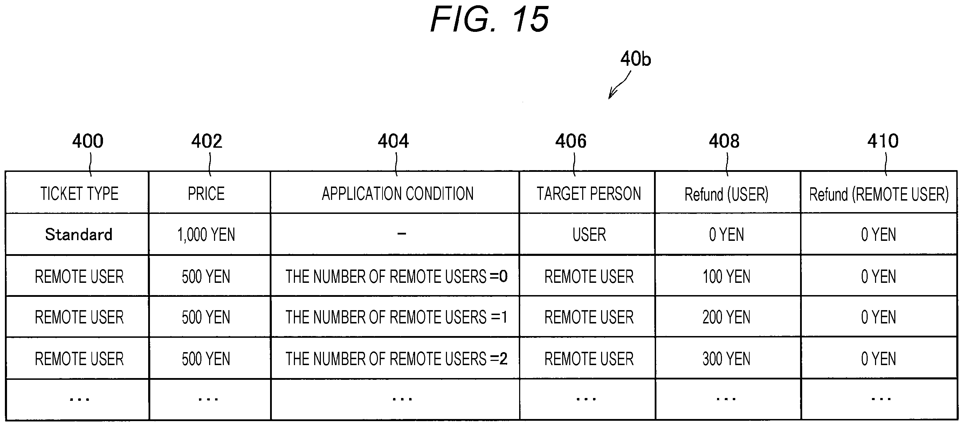

Furthermore, Fig. 15 is an explanatory diagram illustrating another example of the ticket price table 40 (a ticket price table 40b). As illustrated in Fig. 15, in the ticket price table 40b, the price is set such that the larger the number of the remote users 4 who have purchased the ticket, the higher the refund amount to the corresponding user 2. More specifically, when a first remote user 4 purchases a ticket of the ticket type "Remote User", "100 yen" is refunded to the corresponding user 2. Furthermore, when a second remote user 4 purchases the ticket of the ticket type "Remote User", "100 yen" is further refunded to the corresponding user 2 (that is, "200 yen" is refunded in total). Furthermore, when a third remote user 4 purchases the ticket of the ticket type "Remote User", "100 yen" is further refunded (that is, "300 yen" is refunded in total). According to the ticket price table 40b, the larger the number of the remote users 4 who have purchased the ticket, the higher the refund amount to the corresponding user 2. That is, the larger the number of the remote users 4 to whom the user 2 provides an image (for example, an image captured in real time in the area 80), the lower the (final) ticket price for the user 2. Therefore, it is possible to return more profits to the user 2 who provides the image to a larger number of the remote users 4.

### - Example 3 of Ticket Price Table 40

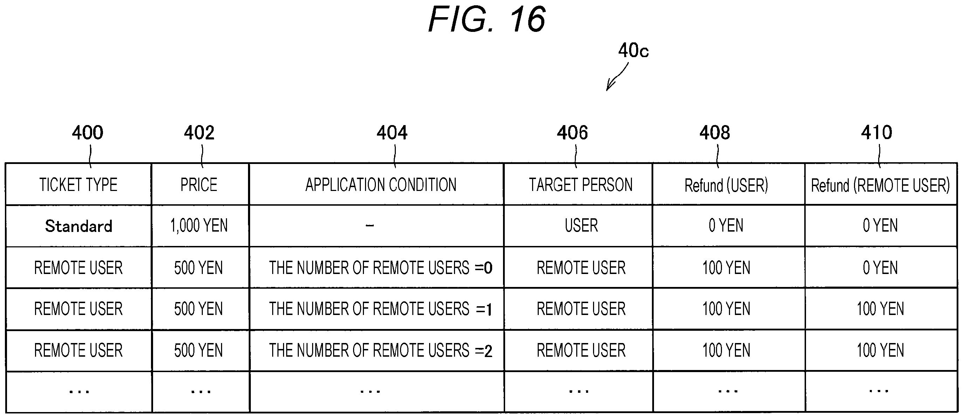

Furthermore, Fig. 16 is an explanatory diagram illustrating another example of the ticket price table 40 (a ticket price table 40c). As illustrated in Fig. 16, in the ticket price table 40c, the price is set such that, in a case where a remote user 4 who has not yet purchased the ticket purchases the ticket, the corresponding user 2 and the remote user 4 who has purchased the ticket are refunded up to "100 yen" at the maximum. More specifically, when a first remote user 4 purchases a ticket of the ticket type "Remote User", "100 yen" is refunded to the corresponding user 2. Furthermore, when a second remote user 4 purchases the ticket of the ticket type "Remote User", "100 yen" is refunded to the remote user 4 who has purchased the ticket first. Furthermore, when a third remote user 4 purchases the ticket of the ticket type "Remote User", "100 yen" is refunded to the remote user 4 who has purchased the ticket second. According to the ticket price table 40c, in the case where the remote user 4 who has not yet purchased the ticket purchases the ticket, the corresponding user 2 and the remote user 4 who has purchased the ticket are refunded within a predetermined amount. Therefore, it can be expected that more remote users 4 will purchase the ticket.

### - Other Examples

Note that, as another example, the ticket price table 40 may be configured such that the higher performance (for example, performance of the imaging unit) of the user device 20, the higher the price of the ticket for the remote user 4. Generally, the higher the performance of the user device 20, the clearer an image can be captured by the user device 20. Furthermore, it is conceivable that the remote user 4 desires to browse a clearer image. According to this modification, since a price of a ticket that a larger number of remote users 4 desires to purchase is set higher, an increase in sales of the business operator can be expected.

### {2-1-5. Transmission Control Unit 108}

The transmission control unit 108 controls transmission of information to another device. For example, the transmission control unit 108 controls transmission of the first function information acquired by the information acquisition unit 102 regarding the user device 20 to the user device 20, on the basis of a determination result by the determination unit 104. As an example, in the case where the determination unit 104 determines that the user device 20 is a valid device, the transmission control unit 108 causes the communication unit 120 to transmit the first function information acquired by the information acquisition unit 102 regarding the user device 20 to the user device 20. Furthermore, in the case where the determination unit 104 determines that the user device 20 is not a valid device, the transmission control unit 108 does not cause the communication unit 120 to transmit the first function information to the user device 20.

Furthermore, the transmission control unit 108 controls transmission of the first function information acquired by the information acquisition unit 102 regarding the remote user device 22 to the user device 20 or the remote user device 22. For example, in a case where the determination unit 104 determines that the user device 20 having the above-described predetermined relationship with the remote user device 22 is a valid device, the transmission control unit 108 causes the communication unit 120 to transmit the second function information to the user device 20 or the remote user device 22. Furthermore, in a case where the determination unit 104 determines that the user device 20 having the above-described predetermined relationship with the remote user device 22 is not a valid device, the transmission control unit 108 does not cause the communication unit 120 to transmit the second function information to the user device 20 and the remote user device 22.

### {2-1-6. Communication Unit 120}

The communication unit 120 can include, for example, a communication device 162 as described later. The communication unit 120 transmits and receives information to and from another device. For example, the communication unit 120 transmits the first function information to the user device 20 or transmits the second function information to the user device 20 or the remote user device 22 under the control of the transmission control unit 108. Furthermore, the communication unit 120 receives the detection result of the position of the user device 20 (for example, the identification information of the sub area 82 where the user device 20 is positioned) from each user device 20.

### {2-7-1. Storage Unit 122}

The storage unit 122 can include, for example, a storage device 160 as described later. The storage unit 122 stores various types of data and various types of software. For example, as illustrated in Fig. 3, the storage unit 122 stores the setting information DB 124.

Note that the configuration of the server 10 according to the present embodiment is not limited to the above-described example. For example, the setting information DB 124 may be stored in another device (not illustrated) connected to the communication network 34 instead of being stored in the storage unit 122.

### <2-2. Processing Flow>

The configuration according to the present embodiment has been described above. Next, a processing flow according to the present embodiment will be described. Specifically, description will be made in an order of "2-2-1. Processing Flow When Determining Validity of User Device 20", "2-2-2. Processing Flow When Transmitting First Function Information", "2-2-3. Processing Flow When Transmitting Second Function Information", and "2-2-4. Flow of Charging Processing to Remote User 4".

### {2-2-1. Processing Flow When Determining Validity of User Device 20}

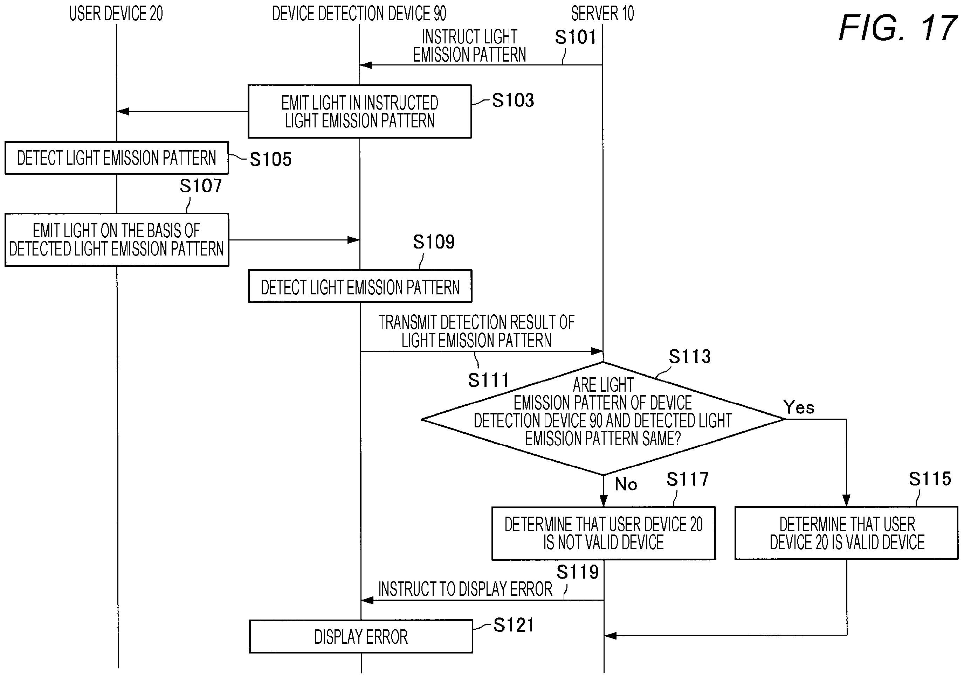

First, a "processing flow when determining the validity of the user device 20" will be described with reference to Fig. 17. Note that, hereinbelow, an example of the processing flow in the case where the user device 20 is a valid device will be described.

As illustrated in Fig. 17, first, under the control of the transmission control unit 108, the communication unit 120 of the server 10 transmits instruction information for causing light emission in a predetermined light emission pattern to the device detection device 90 installed in the area 80 (S101).

Thereafter, the device detection device 90 causes the light emission unit (for example, the LED) to emit light in the light emission pattern indicated by the received instruction information (S103).

Thereafter, the user device 20 detects the light emission pattern of the light emitted in S103 (S105). Then, the user device 20 emits light on the basis of the detected light emission pattern. For example, the user device 20 emits light in the same pattern as the detected light emission pattern (S107).

Thereafter, the device detection device 90 detects the light emission pattern of the light emitted in S107 (S109). Then, the device detection device 90 transmits the detection result to the server 10 (S111).

Thereafter, the determination unit 104 of the server 10 determines whether or not the light emission pattern indicated by the received detection result and the light emission pattern instructed in S101 are the same (S113). In a case where the light emission patterns are the same (S113: Yes), the determination unit 104 determines that the user device 20 corresponding to the detection result is a valid device (S115). Then, the processing ends.

On the other hand, in a case where the light emission patterns are different (S113: No), the determination unit 104 determines that the user device 20 corresponding to the detection result is not a valid device (S117). Then, under the control of the transmission control unit 108, the communication unit 120 transmits instruction information for displaying an error to the device detection device 90 (S119).

Thereafter, the device detection device 90 performs display indicating an error on the basis of the received instruction information. With this arrangement, for example, an attendant in the area 80 prevents the corresponding user device 20 from being used in the area 80 (S121). Then, the processing ends.

### (2-2-1-1. Modification)

Note that the "processing flow when determining the validity of the user device 20" is not limited to the above-described example. For example, as a modification of S101 to S103, the device detection device 90 may emit light (autonomously) in a predetermined light emission pattern. Furthermore, as a modification of S111 to S113, instead of the server 10, the device detection device 90 may determine whether or not the light emission pattern of the light emitted by the user device 20 and the light emission pattern of the light emitted by the device detection device 90 are the same.

### {2-2-2. Processing Flow When Transmitting First Function Information}

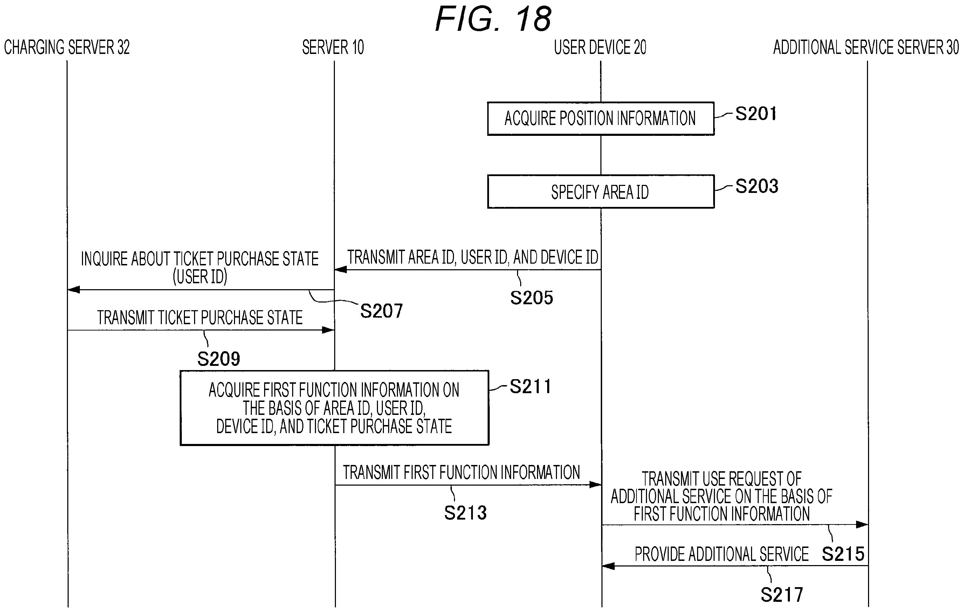

Next, a "processing flow when transmitting the first function information" will be described with reference to Fig. 18. Note that the processing can be executed in the case where it is determined that the user device 20 is a valid device in the processing flow illustrated in Fig. 17, for example. Furthermore, the processing can be repeatedly executed, for example, at predetermined time intervals.

As illustrated in Fig. 18, the user device 20 first acquires the current position information (S201). Subsequently, the user device 20 specifies an area ID (identification information) of the sub area 82 corresponding to the acquired position information (S203). Subsequently, the user device 20 transmits the specified area ID, the user ID of the user 2 wearing the user device 20, and the device ID of the user device 20 to the server 10 (S205).

Thereafter, the charging processing unit 106 of the server 10 generates the acquisition request of the information indicating the purchase state of the predetermined ticket including the received user ID. Then, the communication unit 120 transmits the acquisition request to the charging server 32 under the control of the charging processing unit 106 (S207).

Thereafter, the charging server 32 extracts the information indicating the purchase state of the predetermined ticket, which is stored in association with the user ID indicated by the acquisition request. Then, the charging server 32 transmits the extracted information to the server 10 (S209).

Thereafter, the information acquisition unit 102 of the server 10 acquires, from the setting information DB 124, the first function information stored in the setting information DB 124 in association with the area ID, the user ID, and the device ID received in S205, and the information indicating the purchase state of the predetermined ticket received in S209 (S211). Then, under the control of the transmission control unit 108, the communication unit 120 transmits the acquired first function information to the corresponding user device 20. With this arrangement, execution of the function indicated by the first function information is permitted to the user device 20 in the current sub area 82, and execution of the function other than the function indicated by the first function information can be restricted to the user device 20 (S213).

Thereafter, for example, in a case where the user 2 desires to use an additional service permitted by the received first function information, the corresponding user device 20 transmits, to the additional service server 30, a use request of the additional service permitted by the first function information (S215).

Thereafter, the additional service server 30 permits the user device 20 to use the additional service on the basis of the received use request (S217).

### {2-2-3. Processing Flow When Transmitting Second Function Information}

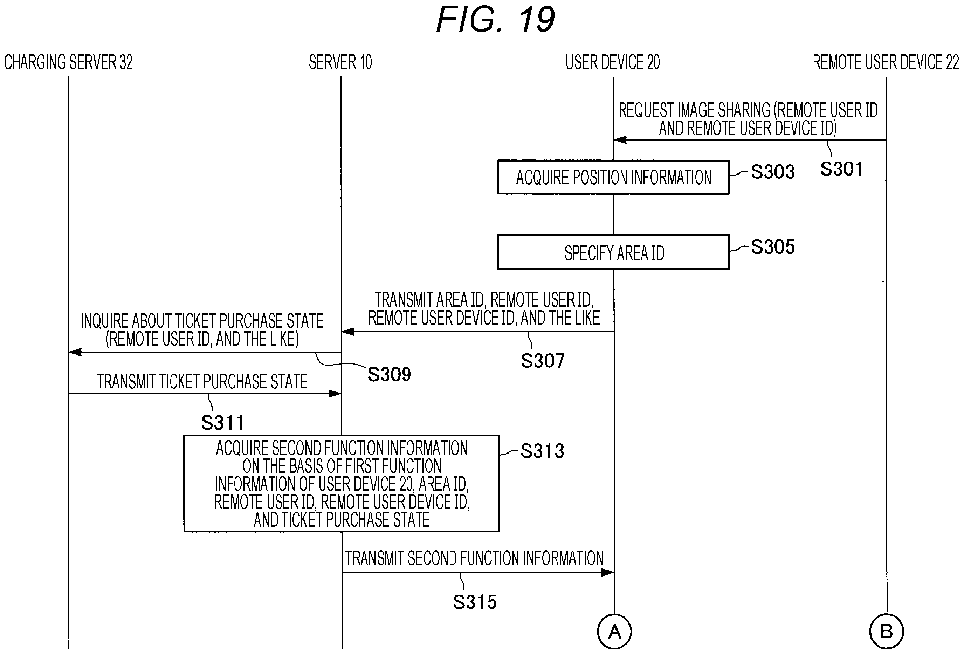

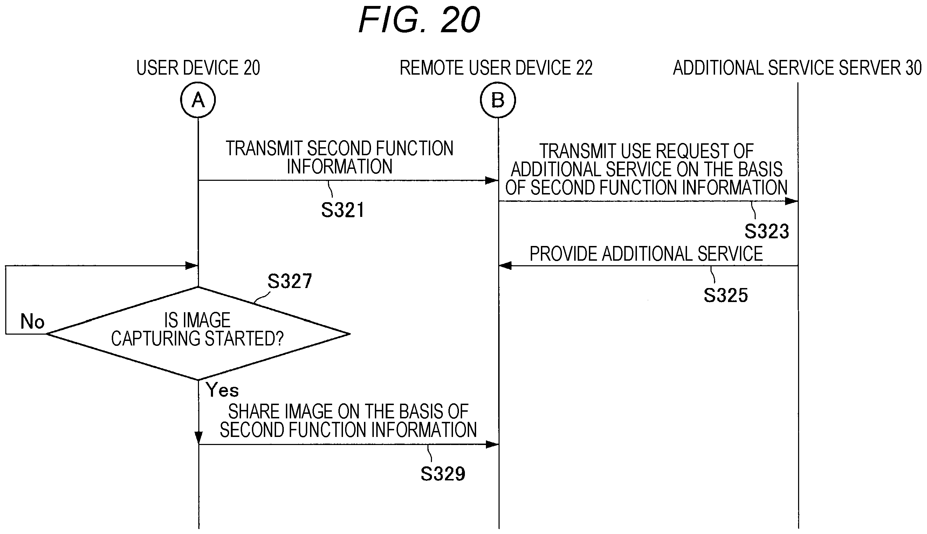

Next, a "processing flow when transmitting the second function information" will be described with reference to Figs. 19 and 20. Note that the processing can be executed in the case where it is determined that the user device 20 is a valid device in the processing flow illustrated in Fig. 17, for example.

As illustrated in Fig. 19, the remote user 4 first selects a user device 20 with which the remote user 4 desires to share an image (in other words, the remote user 4 desires to view an image based on image capturing by the corresponding user device 20) among a plurality of user devices 20 positioned in the area 80. Then, the remote user device 22 transmits a request for image sharing to the selected user device 20 on the basis of operation of the remote user 4, for example. Here, the request for image sharing includes the user ID of the remote user 4 and the device ID of the remote user device 22 (S301). Note that, hereinbelow, description will be made assuming that the user 2 wearing the corresponding user device 20 has accepted the request for image sharing.

Thereafter, the user device 20 acquires the current position information (S303). Subsequently, the user device 20 specifies an area ID of the sub area 82 corresponding to the acquired position information (S305). Subsequently, the user device 20 transmits the information such as the specified area ID, and the user ID of the remote user 4 and the device ID of the remote user device 22 received in S301 to the server 10 (S307).

Thereafter, the charging processing unit 106 of the server 10 generates the acquisition request of the information indicating the purchase state of the predetermined ticket including the received user ID of the remote user 4. Then, the communication unit 120 transmits the acquisition request to the charging server 32 under the control of the charging processing unit 106 (S309).

Thereafter, the charging server 32 extracts the information indicating the purchase state of the predetermined ticket, which is stored in association with the user ID of the remote user 4 indicated by the acquisition request. Then, the charging server 32 transmits the extracted information to the server 10 (S311).

Thereafter, the information acquisition unit 102 of the server 10 acquires, from the setting information DB 124, the second function information stored in the setting information DB 124 in association with first acquisition information provided to the user device 20, the area ID, the user ID of the remote user 4, and the device ID of the remote user device 22 received in S307, and the information indicating the purchase state of the predetermined ticket received in S311 (S313). Then, under the control of the transmission control unit 108, the communication unit 120 transmits the acquired second function information to the corresponding user device 20 (S315).

Here, the processing flow after S315 will be described with reference to Fig. 20. After S315, the user device 20 transmits the received second function information to the remote user device 22. With this arrangement, execution of the function indicated by the second function information can be permitted to the remote user device 22, and execution of the function other than the function indicated by the second function information can be restricted to the remote user device 22 (S321).

Thereafter, for example, in a case where the remote user 4 desires to use an additional service permitted by the received second function information, the corresponding remote user device 22 transmits, to the additional service server 30, a use request of the additional service permitted by the second function information (S323).

Thereafter, the additional service server 30 permits the user device 20 to use the additional service on the basis of the received use request (S325).

Furthermore, in a case where the user device 20 starts capturing an image in the area 80 after S321 (S327: Yes), the user device 20 transmits the image to the corresponding remote user device 22 in real time. Then, the remote user device 22 sequentially displays the received image within a range permitted by the second function information received in S321 (S329).

### (2-2-3-1. Modification)

Note that the "processing flow when transmitting the second function information" is not limited to the above-described example. For example, as a modification of S301 to S307, instead of the user device 20, the remote user device 22 may (directly) transmit the acquisition request of the second function information (including the user ID of the corresponding user 2, the user ID of the remote user 4, and the device ID of the remote user device 22, for example) to the server 10. Furthermore, as a modification of S315 to S321, instead of the user device 20, the server 10 may (directly) transmit the second function information to the remote user device 22.

### {2-2-4. Flow of Charging Processing to Remote User 4}

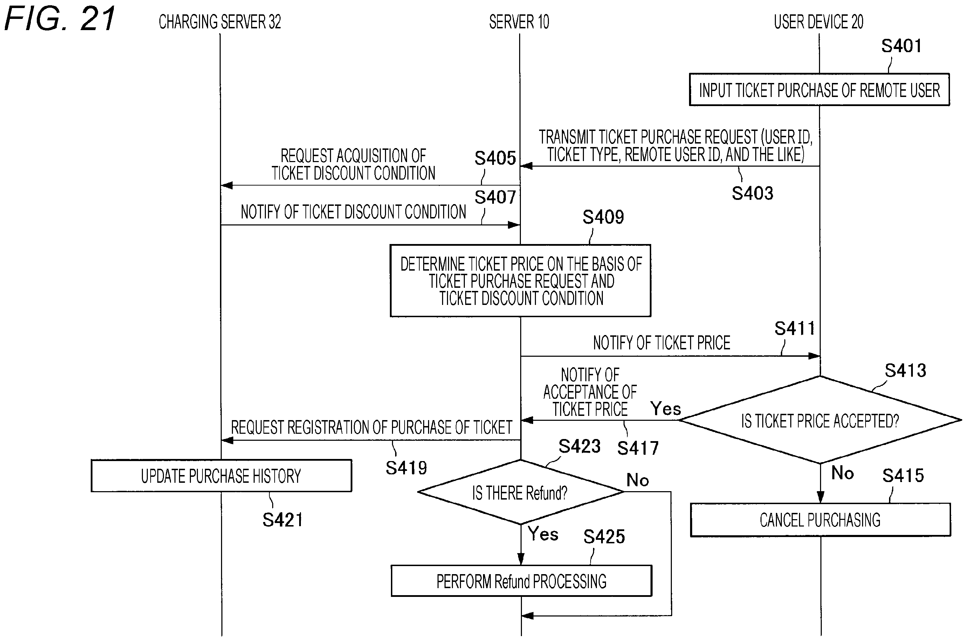

Next, a "flow of the charging processing to the remote user 4" will be described with reference to Fig. 21. Note that, hereinbelow, an example will be described in which the user 2 requests to the server 10 to purchase the predetermined ticket for one remote user 4 associated with the user 2.

As illustrated in Fig. 21, the user 2 wearing the user device 20 first performs operation on the user device 20 for purchasing the ticket for the corresponding remote user 4 (S401). Thereafter, the user device 20 transmits a ticket purchase request to the server 10. Here, the ticket purchase request includes, for example, the user ID of the user 2, the type of the ticket to be purchased, and the user ID of the corresponding remote user 4 (S403).

Thereafter, on the basis of the received ticket purchase request, the charging processing unit 106 of the server 10 causes the communication unit 120 to transmit an acquisition request of the ticket discount condition to the charging server 32 (S405).

Thereafter, the charging server 32 notifies the server 10 of the ticket discount condition (S407).

Thereafter, the charging processing unit 106 of the server 10 determines the price of the ticket to be purchased indicated by the ticket purchase request received in S403, on the basis of the notified ticket discount condition (S409). Then, the communication unit 120 transmits the determined ticket price to the corresponding user device 20 under the control of the charging processing unit 106 (S411).

Thereafter, the user device 20 presents the notified ticket price to the user 2, and inquires of the user 2 about acceptance/non-acceptance of the price (S413). In a case where the ticket price is not accepted by the user 2 (S413: No), the user device 20 cancels the ticket purchase processing (S415). Then, the processing ends.

On the other hand, in a case where the ticket price is accepted by the user 2 (S413: Yes), the user device 20 notifies the server 10 that the ticket price is accepted (S417).

Thereafter, under the control of the charging processing unit 106, the communication unit 120 of the server 10 transmits a registration request for registering the purchase of the corresponding ticket by the corresponding remote user 4 to the charging server 32 (S419). Thereafter, the charging server 32 updates the stored purchase history on the basis of the received registration request (S421).

Furthermore, after S419, the charging processing unit 106 confirms whether or not a refund to the user 2 or the remote user 4 (who has previously purchased a ticket of the same type) is generated by the purchase of the ticket, for example (S423). In a case where a refund is not generated (S423: No), the processing ends.

On the other hand, in a case where a refund is generated (S423: Yes), the charging processing unit 106 performs refund processing (S425). Then, the processing ends.

### <2-3. Effect>

### {2-3-1. Effect 1}

As described above, according to the present embodiment, the server 10 acquires the first function information of the user device 20 provided by the business operator in the area 80 and then transmit the first function information to the user device 20. With this arrangement, it is possible to provide a function to the user device 20 in the area 80 in accordance with specification by the business operator. For example, it is possible to permit the user device 20 in the area 80 to execute a function specified by the business operator.

### {2-3-2. Effect 2}

Furthermore, according to the present embodiment, each business operator can flexibly set a function to be permitted or added to the user device 20 and the remote user device 22 for each area 80 and for each sub area 82 in the area 80. Furthermore, each business operator can also flexibly set the function to be permitted or added to the user device 20 and the remote user device 22 depending not only on the identification information of the sub area 82 but also on the conditions such as the purchase state of the predetermined ticket or the charging state of each user 2 and each remote user 4. Therefore, it is possible to provide detailed functional restrictions or services based on the sub area 82 in the area 80, the user 2, the remote user 4, the purchase state of the predetermined ticket, and the like. That is, variations in service provision on a side of the business operator can increase.

### {2-3-3. Effect 3}

Furthermore, the server 10 can determine whether or not the user device 20 is a valid device on the basis of the detection result of the signal transmitted by the user device 20. With this arrangement, an attendant in the area 80 can eliminate the use of an invalid device in the area 80, so that a profit of the business operator can be appropriately protected. Furthermore, the business operator can provide various functions to the (valid) user device 20 with peace of mind. As a result, the convenience of the user 2 and the remote user 4 is improved.

### {2-3-4. Effect 4}

Furthermore, the server 10 can return a profit to the user 2 sharing the image with the remote user 4, for example, in accordance with the purchase state of the ticket of the remote user 4. For example, the server 10 can discount an entrance fee of the area 80 for the user 2 or give points to the user 2. With this arrangement, new promotion and service infrastructure can be provided to the business operator.

### {2-3-5. Effect 5}

Furthermore, according to the present embodiment, the business operator can hierarchically set the contents of the first function information provided to the user device 20 and the contents of the second function information provided to the remote user device 22, in accordance with the sub area 82 where the user device 20 is positioned. Accordingly, the business operator can set the contents of the first function information and the second function information flexibly and easily. For example, the business operator can restrict a specific function in the entire area 80 or restrict some functions only in a specific sub area 82 (for example, a place where a popular attraction or popular content exists). Furthermore, the business operator can permit a larger number of functions to the user 2 only in a specific sub area 82 (for example, a restaurant).

### <2-4. Application Examples>

Next, application examples according to the present embodiment will be described in "2-4-1. Application Example 1" to "2-4-3. Application Example 3".

### {2-4-1. Application Example 1}

First, Application Example 1 will be described. In Application Example 1, it is assumed that the area 80 is an art museum 80a. It is also assumed that the user 2 wearing the user device 20 visits the art museum 80a, and the remote user 4 views an image captured by the user device 20 in the art museum 80a.

Now, it is assumed that the user 2 is positioned in front of a picture exhibited in an exhibition room of the art museum 80a. In this case, the server 10 according to Application Example 1 permits the user device 20 to transmit the captured high-resolution image only to the remote user device 22 of the remote user 4 who has purchased a predetermined ticket. Furthermore, the server 10 permits the user device 20 to transmit the captured image after reducing a resolution thereof to the remote user device 22 of the remote user 4 who has not purchased the predetermined ticket. With this arrangement, only the remote user 4 who has purchased the predetermined ticket can view the image in the exhibition room with high resolution.

Moreover, the server 10 may provide a free viewpoint image in the exhibition room only to the remote user device 22 of the remote user 4 who has purchased the predetermined ticket. With this arrangement, the remote user 4 can have an experience of freely looking around the exhibition room.

### {2-4-2. Application Example 2}

Next, Application Example 2 will be described. In Application Example 2, it is assumed that the area 80 is a movie theater 80b. It is also assumed that the user 2 wearing the user device 20 watches a movie at the movie theater 80b, and the remote user 4 (simultaneously) views an image of the movie captured by the user device 20.

The server 10 according to Application Example 2 permits only the remote user device 22 of the remote user 4 who has purchased a predetermined ticket to display the high-resolution image captured by the user device 20 (that is, the image of the movie). Furthermore, the server 10 permits the remote user device 22 of the remote user 4 who has not purchased the predetermined ticket to display the image in a state where a resolution of the image captured by the user device 20 is lowered. With this arrangement, only the remote user 4 who has purchased the predetermined ticket can view the movie with high resolution.

Note that, in Application Example 2, when the user 2 enters or leaves the movie theater 80b, an operator checks whether or not the user device 20 is a valid device. Furthermore, the device detection device 90 installed in the movie theater 80b checks presence or absence of an invalid device in the movie theater 80b. Specifically, when a signal (such as invisible light) is transmitted from the device detection device 90, the (valid) user device 20 transmits a confirmation signal by invisible light to the device detection device 90.

### {2-4-3. Application Example 3}

Next, Application Example 3 will be described. In Application Example 3, it is assumed that the area 80 is a theme park 80c. It is also assumed that the user 2 wearing the user device 20 visits the theme park 80c, and the remote user 4 views an image captured by the user device 20 in the theme park 80c. Note that, in Application Example 3, when the user 2 enters or leaves the theme park 80c, an operator checks whether or not the user device 20 is a valid device.

In Application Example 3, in a case where the user 2 has purchased a standard ticket (for example, an admission ticket to the theme park 80c), the server 10 permits the remote user devices 22 of all the remote users 4 associated with the user 2 to display an image captured by user device 20 in a general attraction. Furthermore, the server 10 permits only the remote user device 22 of the remote user 4 who has purchased a ticket for the remote user 4 to display an image captured by the user device 20 in a popular attraction. Moreover, the server 10 permits only the remote user 4 who has purchased the ticket for the remote user 4 to use an additional service permitting the remote user 4 to take a photograph with the user 2 (specifically, a service for adding an image of the remote user 4 to a photograph of the user 2 actually taken, or the like) in a specific attraction (for example, a horror ride).

### <<3. Hardware Configuration>>

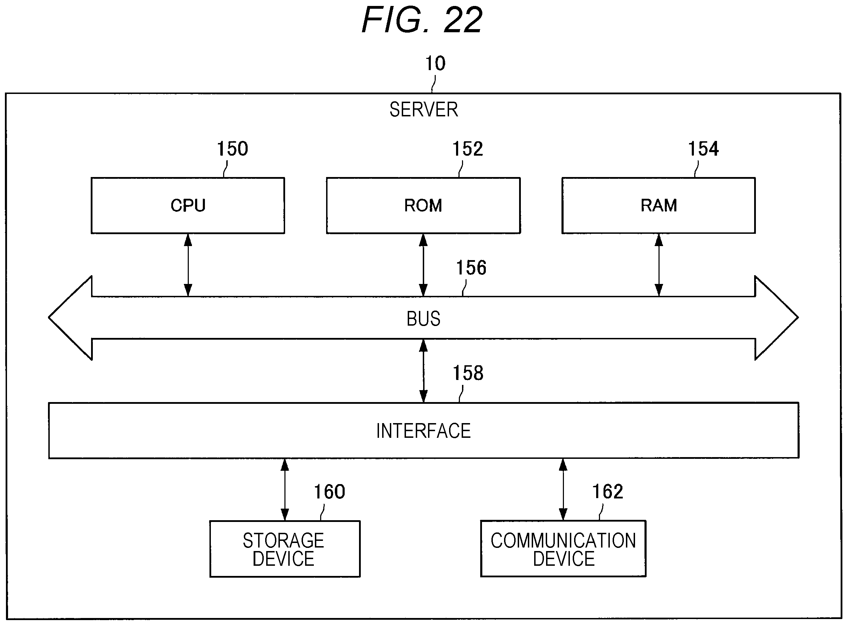

Next, a hardware configuration of the server 10 according to the present embodiment will be described with reference to Fig. 22. As illustrated in Fig. 22, the server 10 includes the CPU 150, a read only memory (ROM) 152, a RAM 154, a bus 156, an interface 158, the storage device 160, and the communication device 162.

The CPU 150 functions as an arithmetic processing unit and a controller to control overall operation in the server 10 in accordance with various programs. Note that the CPU 150 includes a processor such as a microprocessor. The CPU 150 can function as the control unit 100 in the server 10.

The ROM 152 stores a program, control data such as calculation parameters, or the like, which are used by the CPU 150.

The RAM 154 temporarily stores a program executed by the CPU 150, for example.

The bus 156 includes a CPU bus and the like. The bus 156 interconnects the CPU 150, the ROM 152, and the RAM 154.

The interface 158 connects the storage device 160 and the communication device 162 to the bus 156.

The storage device 160 is a device for data storage. The storage device 160 includes, for example, a storage medium, a recording device that records data in the storage medium, a readout device that reads out data from the storage medium, or a deletion device that deletes data recorded in the storage medium. The storage device 160 can function as the storage unit 122 in the server 10.

The communication device 162 is, for example, a communication interface including a communication device or the like for connecting to the communication network 34 or the like. Furthermore, the communication device 162 may be a wireless LAN compatible communication device, a long term evolution (LTE) compatible communication device, or a wired communication device that performs wired communication. The communication device 162 can function as the communication unit 120 in the server 10.

### <<4. Modification>>

Although the preferred embodiments of the present disclosure have been described above in detail with reference to the accompanying drawings, the present disclosure is not limited to the examples. It is clear that various modifications or alterations can be conceived by a person having ordinary skill in the art to which the present disclosure pertains within the scope of the technical idea described in claims, and it should be understood that such modifications and alterations are to be included in the technical scope of the present disclosure as a matter of course.

### <4-1. Modification 1>

For example, in the above-described embodiment, an example was described in which the contents of the function to be permitted or added to the user device 20 or the remote user device 22 are basically determined only by the server 10 (specifically, the contents registered in the setting information DB 124), but the present disclosure is not limited to such an example. As an example, the contents of the function to be permitted or added to the user device 20 or the remote user device 22 may be determined by combining the first function information or the second function information transmitted by the server 10 and the information stored in the user device 20 or the remote user device 22. In other words, the processing of determining the contents of the function to be permitted or added to the user device 20 or the remote user device 22 may be shared among the server 10, the user device 20, and the remote user device 22. For example, the user device 20 may relax the contents of the restriction of the function based on the first function information received from the server 10, on the basis of the information stored in the user device 20. Furthermore, the user device 20 or the remote user device 22 may relax the contents of the restriction of the function based on the second function information received from the server 10, on the basis of the information stored in the user device 20 or the remote user device 22 (for example, the information indicating that the remote user 4 has purchased a special ticket).

### <4-2. Modification 2>

Furthermore, as another modification, in a case where the remote user 4 has a special ticket (for example, a participation ticket for a predetermined event), the server 10 may permit the remote user 4 to switch the user 2 as an image sharing partner (among a plurality of users 2 positioned in the area 80). That is, the server 10 may permit the remote user 4 to switch a viewpoint among a plurality of user devices 20 positioned in the area 80. For example, the remote user 4 may be able to switch a viewpoint between a user device 20a worn by a user 2a as a spectator and a user device 20b worn by a user 2b as a performer, at a predetermined event.

As an example, in the setting information DB 124, whether or not to permit the remote user 4 to switch the user 2 as the image sharing partner (to move a viewpoint) can be registered in association with the sub area 82. Furthermore, in a case where the switching is permitted, the contents of the function to be permitted or added to the remote user 4 after the switching can be registered in the setting information DB 124. With this arrangement, the server 10 can re-evaluate the contents of the function to be permitted or added to the remote user 4 after switching a viewpoint.

### <4-3. Modification 3>

Furthermore, the configuration of the information processing system according to the present embodiment is not limited to the example illustrated in Fig. 1. For example, any two or more of the server 10, the additional service server 30, and the charging server 32 may be configured as an integrated device.

### <4-4. Modification 4>

Furthermore, in the above-described embodiment, an example in which the information processing apparatus in the present disclosure is the server 10 has been described, but the present disclosure is not limited to this example. For example, the information processing apparatus may be a general-purpose PC, a tablet terminal, a game machine, a mobile phone such as a smartphone, a portable music player, a robot, or a wearable device such as an HMD or an augmented reality (AR) glass.

### <4-5. Modification 5>

Furthermore, each step in the processing flow of the above-described embodiment may not necessarily be processed in the described order. For example, each step may be processed in a suitably reordered manner. Furthermore, each step may be processed partially in parallel or individually, instead of being processed in time series. Furthermore, some of the described steps may be omitted or additional steps may be added.

### <4-6. Modification 6>

Furthermore, according to the above-described embodiment, it is also possible to provide a computer program for causing the hardware such as the CPU 150, the ROM 152, and the RAM 154 to exhibit functions equivalent to those of the respective configurations of the server 10 according to the above-described embodiment. Furthermore, there is also provided a recording medium on which the computer program is recorded.

Furthermore, the effects described in the present specification are merely illustrative or exemplary, and not limiting. That is, the technology according to the present disclosure can exhibit other effects apparent to those skilled in the art from the description of the present specification, in addition to or instead of the above-described effects.

Note that the following configurations are also within the technical scope of the present disclosure.
(1) An information processing apparatus including:
   an acquisition unit configured to acquire first function information of a device of a second user, the first function information being provided in a predetermined area of a real space by a first user; and
   a transmission control unit configured to control transmission of the first function information to the device of the second user.
(2) The information processing apparatus according to (1), in which the acquisition unit acquires, as the first function information, function information associated with a detection result of a position of the second user.
(3) The information processing apparatus according to (2), in which the predetermined area includes a plurality of sub areas, and the acquisition unit acquires, as the first function information, function information associated with a sub area where the second user is positioned among the plurality of sub areas.
(4) The information processing apparatus according to (2) or (3), in which the acquisition unit acquires, as the first function information, function information further associated with identification information of the second user.
(5) The information processing apparatus according to any one of (2) to (4), in which the acquisition unit acquires, as the first function information, function information further associated with the device of the second user.
(6) The information processing apparatus according to any one of (2) to (5), in which the acquisition unit acquires, as the first function information, function information further associated with a purchase state of a predetermined ticket or a charging state of the second user.
(7) The information processing apparatus according to any one of (2) to (6), in which the first function information is information indicating a function permitted to be executed by the device of the second user.
(8) The information processing apparatus according to (7), in which the first function information is function information provided to the device of the second user by the first user regarding content provided in the predetermined area.
(9) The information processing apparatus according to (8), in which the predetermined area includes a plurality of sub areas,
   the content includes content associated with a sub area where the second user is positioned among the plurality of sub areas, and
   the first function information includes information indicating a function permitted to the device of the second user regarding the content associated with the sub area where the second user is positioned.
(10) The information processing apparatus according to any one of (2) to (9), in which
   the acquisition unit further acquires second function information of a device of a third user, the second function information being provided by the first user regarding the predetermined area,
   the transmission control unit further controls transmission of the second function information to the device of the second user or the device of the third user,
   the third user is positioned outside the predetermined area, and
   the second function information is associated with the first function information.
(11) The information processing apparatus according to (10), in which the acquisition unit acquires, as the second function information, function information further associated with identification information of the third user or the device of the third user.
(12) The information processing apparatus according to (10) or (11), in which the acquisition unit acquires, as the second function information, function information further associated with a purchase state of a predetermined ticket or a charging state of the third user.
(13) The information processing apparatus according to any one of (10) to (12), in which the second function information is information indicating a function permitted to be executed by the device of the third user.
(14) The information processing apparatus according to (13), in which the second function information is function information provided to the device of the third user by the first user regarding content provided in the predetermined area.
(15) The information processing apparatus according to (14), in which the predetermined area includes a plurality of sub areas,
   the content includes content associated with a sub area where the second user is positioned among the plurality of sub areas, and
   the second function information includes information indicating a function permitted to the device of the third user regarding the content associated with the sub area where the second user is positioned.
(16) The information processing apparatus according to (14) or (15), in which
   the device of the second user is a wearable device including an imaging unit,
   an image corresponding to image capturing by the imaging unit in the predetermined area is transmitted to the device of the third user, and
   the second function information includes information indicating a function permitted to the device of the third user regarding the image.
(17) The information processing apparatus according to any one of (2) to (16), further including a determination unit configured to determine, on the basis of a detection result of a signal transmitted by the device of the second user, whether or not the device of the second user is a device having permission to use the first function information,
   in which, in a case where the determination unit determines that the device of the second user is not a device having permission to use the first function information, the transmission control unit does not cause the communication unit to transmit the first function information to the device of the second user.
(18) The information processing apparatus according to any one of (2) to (17), in which
   the first user has management authority of the predetermined area, and
   the second user does not have the management authority of the predetermined area.
(19) An information processing method including:
   acquiring first function information of a device of a second user, the first function information being provided in a predetermined area of a real space by a first user; and
   controlling, by a processor, transmission of the first function information to the device of the second user.
(20) A program for causing a computer to function as:
   an acquisition unit configured to acquire first function information of a device of a second user, the first function information being provided in a predetermined area of a real space by a first user; and
   a transmission control unit configured to control transmission of the first function information to the device of the second user.

### REFERENCE SIGNS LIST

- 10: Server
- 20: User device
- 22: Remote user device
- 30: Additional service server
- 32: Charging server
- 34: Communication network
- 40: Ticket price table
- 90: Device detection device
- 100, 200: Control unit
- 102: Information acquisition unit
- 104: Determination unit
- 106: Charging processing unit
- 108: Transmission control unit
- 120, 220: Communication unit
- 122, 230: Storage unit
- 124: Setting information DB
- 222: Position information reception unit
- 224: Sensor unit
- 226: Light emission unit
- 228: Display unit

## Claims

1. An information processing apparatus comprising:
an acquisition unit configured to acquire first function information of a device of a second user, the first function information being provided in a predetermined area of a real space by a first user; and
a transmission control unit configured to control transmission of the first function information to the device of the second user.

2. The information processing apparatus according to claim 1, wherein the acquisition unit acquires, as the first function information, function information associated with a detection result of a position of the second user.

3. The information processing apparatus according to claim 2, wherein
the predetermined area includes a plurality of sub areas, and
the acquisition unit acquires, as the first function information, function information associated with a sub area where the second user is positioned among the plurality of sub areas.

4. The information processing apparatus according to claim 2, wherein the acquisition unit acquires, as the first function information, function information further associated with identification information of the second user.

5. The information processing apparatus according to claim 2, wherein the acquisition unit acquires, as the first function information, function information further associated with the device of the second user.

6. The information processing apparatus according to claim 2, wherein the acquisition unit acquires, as the first function information, function information further associated with a purchase state of a predetermined ticket or a charging state of the second user.

7. The information processing apparatus according to claim 2, wherein the first function information is information indicating a function permitted to be executed by the device of the second user.

8. The information processing apparatus according to claim 7, wherein the first function information is function information provided to the device of the second user by the first user regarding content provided in the predetermined area.

9. The information processing apparatus according to claim 8, wherein
the predetermined area includes a plurality of sub areas,
the content includes content associated with a sub area where the second user is positioned among the plurality of sub areas, and
the first function information includes information indicating a function permitted to the device of the second user regarding the content associated with the sub area where the second user is positioned.

10. The information processing apparatus according to claim 2, wherein
the acquisition unit further acquires second function information of a device of a third user, the second function information being provided by the first user regarding the predetermined area,
the transmission control unit further controls transmission of the second function information to the device of the second user or the device of the third user,
the third user is positioned outside the predetermined area, and
the second function information is associated with the first function information.

11. The information processing apparatus according to claim 10, wherein the acquisition unit acquires, as the second function information, function information further associated with identification information of the third user or the device of the third user.

12. The information processing apparatus according to claim 10, wherein the acquisition unit acquires, as the second function information, function information further associated with a purchase state of a predetermined ticket or a charging state of the third user.

13. The information processing apparatus according to claim 10, wherein the second function information is information indicating a function permitted to be executed by the device of the third user.

14. The information processing apparatus according to claim 13, wherein the second function information is function information provided to the device of the third user by the first user regarding content provided in the predetermined area.

15. The information processing apparatus according to claim 14, wherein
the predetermined area includes a plurality of sub areas,
the content includes content associated with a sub area where the second user is positioned among the plurality of sub areas, and
the second function information includes information indicating a function permitted to the device of the third user regarding the content associated with the sub area where the second user is positioned.

16. The information processing apparatus according to claim 14, wherein
the device of the second user is a wearable device including an imaging unit,
an image corresponding to image capturing by the imaging unit in the predetermined area is transmitted to the device of the third user, and
the second function information includes information indicating a function permitted to the device of the third user regarding the image.

17. The information processing apparatus according to claim 2, further comprising a determination unit configured to determine, on a basis of a detection result of a signal transmitted by the device of the second user, whether or not the device of the second user is a device having permission to use the first function information,
wherein, in a case where the determination unit determines that the device of the second user is not a device having permission to use the first function information, the transmission control unit does not cause the communication unit to transmit the first function information to the device of the second user.

18. The information processing apparatus according to claim 2, wherein
the first user has management authority of the predetermined area, and
the second user does not have the management authority of the predetermined area.

19. An information processing method comprising:
acquiring first function information of a device of a second user, the first function information being provided in a predetermined area of a real space by a first user; and
controlling, by a processor, transmission of the first function information to the device of the second user.

20. A program for causing a computer to function as:
an acquisition unit configured to acquire first function information of a device of a second user, the first function information being provided in a predetermined area of a real space by a first user; and
a transmission control unit configured to control transmission of the first function information to the device of the second user.
